# EUROPÄISCHE PATENTSCHRIFT

(11) **EP 3 187 751 B1**
(45) Veröffentlichungstag und Bekanntmachung des Hinweises auf die Patenterteilung: **06.03.2019**
(21) Anmeldenummer: 15203052.4
(22) Anmeldetag: 30.12.2015
(51) Int. Cl.: F16H 15/50, B62M 11/16, B62M 11/12

(54) **STUFENLOSES PLANETENGETRIEBE**
INFINITELY ADJUSTABLE PLANETARY GEAR
TRAIN EPICYCLOÏDAL CONTINU

(43) Veröffentlichungstag der Anmeldung: 05.07.2017
(73) Patentinhaber: Rolless GmbH, 88480 Achstetten (DE)
(72) Erfinder: Rodi, Wolfgang, 88471 Laupheim/Baustetten (DE)
(74) Vertreter: Caspary, Karsten

(56) Entgegenhaltungen:
- EP-A1- 0 528 381
- EP-A1- 2 397 723
- WO-A1-2008/040281
- CH-A- 265 617
- DE-U1- 8 704 197
- JP-A- H02 212 651
- US-A- 2 359 540
- US-A- 2 860 530
- US-A- 3 407 687

## Beschreibung

Die vorliegende Erfindung betrifft ein stufenloses Planetengetriebe für Maschinen und Fahrzeuge, insbesondere für mit Muskelkraft angetriebene Fahrzeuge wie Fahrräder, Pedelecs und E-Bikes.

Bei Fahrrädern kommen vermehrt bekannte Nabengetriebe zum Einsatz, die üblicherweise als Planetengetriebe ausgebildet sind. Prinzipiell kann bei diesen zwischen stufenlos schaltbaren Getrieben (z. B. NuVinci CVP N360) und Getrieben mit Gerad- oder Schrägverzahnung und festen Übersetzungsstufen (z. B. Rohloff Speedhub, Shimano Alfine) unterschieden werden. Das zunehmende Angebot an Pedelecs und E-Bikes führt auch zu neuen Anforderungen an die Fahrradgetriebe. So sind bei herkömmlichen, formschlüssig arbeitenden Kettenschalt- und Hinterradnabengetrieben deutliche Schaltgeräusche zu vernehmen und es ist mit einem erhöhten Verschleiß bis hin zur Beschädigung des Getriebes zu rechnen, wenn diese unter Last geschaltet werden, ohne die Getriebeelemente zu trennen.

Gegenüber Getrieben mit festen Übersetzungsstufen weisen stufenlose Getriebe die Vorteile auf, dass sie sehr gut unter Volllast sowie im Stillstand schaltbar sind, einen einfachen Aufbau aufweisen, und dass die Wälzkörper ruhig laufen und im Vergleich zu Zahnrädern sehr geringe bis keine Schwingungen erzeugen und somit nahezu lautlos arbeiten. Nabengetriebe sind zudem wartungsarm und hermetisch abgedichtet, was sie wiederum vor Verschmutzung und äußerer Beschädigung schützt. Allerdings ist die Gesamtübersetzung der stufenlosen Getriebe bisher relativ beschränkt und fällt deutlich geringer aus als bei den Getrieben mit festen Schaltstufen. Ebenso liegt der maximal erreichbare Wirkungsgrad von bekannten stufenlosen Getrieben bisher wesentlich niedriger.

Stufenlose Planetengetriebe, die insbesondere für Fahrradnabengetriebe geeignet sind, sind sogenannte Reibradgetriebe und bestehen üblicherweise aus zwei ringförmigen Übertragungselementen zur Übertragung des Eingangs- und Ausgangsdrehmoments, mehreren rotationssymmetrischen Wälzkörpern und einem ringförmigen Stützelement, welches die Wälzkörper gegenüber den Übertragungselementen abstützt. Das durch den Anwender oder z. B. einen Elektromotor erzeugte Drehmoment wird üblicherweise über eine Kette oder einen Zahnriemen und ein Ritzel auf das erste Übertragungselement eingeleitet und vom ersten Übertragungselement mittels der Wälzkörper auf das zweite Übertragungselement übertragen, welches mit dem Nabengehäuse in fester Verbindung steht. In der Regel sind dabei die Übertragungselemente, die Wälzkörper und das Stützelement um eine Getriebeachse angeordnet und um diese drehbar gelagert. Die Übersetzung ergibt sich bei solchen Getrieben aus dem Verhältnis der Wirkradien der Wälzkörper auf der Eingangs- bzw. Ausgangsseite, wobei die Wirkradien als auf die Rotationsachse der Wälzkörper senkrecht stehende Linien zwischen dieser und der Kontaktstelle zwischen dem Wälzkörper und dem jeweiligen Übertragungselement definiert sind.

Unterschieden werden verschiedene Bauformen von Reibradgetrieben, die vor allem für Fahrradnabengetriebe geeignet sind, unter anderem bezüglich der verwendeten Wälzkörpergeometrie. Bisher wurde hauptsächlich in kugelförmige und doppelkegelförmige Wälzkörper unterteilt. Ein weiteres Unterscheidungskriterium ist die Anordnung der Übertragungs- und Stützelemente, wobei bei einigen Reibradgetrieben die Übertragungselemente auf der der Getriebeachse zugewandten Seite der Wälzkörper und das Stützelement auf der der Getriebeachse abgewandten Seite des Wälzkörpers angeordnet sind. In anderen Ausführungsformen sind die Übertragungselemente auf der der Getriebeachse abgewandten Seite und das Stützelement auf der der Getriebeachse zugewandten Seite der Wälzkörper angeordnet.

Das Bohr-/Wälzverhältnis kennzeichnet das Ausmaß der Bohrbewegung und der damit verbundenen Verluste in den Kontaktstellen zweier rotierender Reibelemente. Die auftretenden Bohr-/Wälzverhältnisse zwischen den rotierenden Reibelementen an den Kraftübertragungsstellen der Wälzkörper geben demnach Aufschluss über den Wirkungsgrad des Getriebes, wobei kleine Bohr-/Wälzverhältnisse prinzipiell für eine hohe Effizienz bei der Kraftübertragung und somit in der Regel für einen hohen Wirkungsgrad stehen. Wesentlich beeinflusst wird das Bohr-/Wälzverhältnis von der Neigung der Drehachsen der rotierenden Wälzkörper zueinander und der Winkellage der Berührungstangente im Kontaktpunkt zu den Drehachsen. Sind die Drehachsen zweier Wälzkörper parallel zueinander angeordnet und liegt die Berührungstangente im Kontaktpunkt ebenfalls parallel zu den Drehachsen, geht die Bohrbewegung und damit das Bohr-/Wälzverhältnis gegen Null. Ebenso geht das Bohr-/Wälzverhältnis gegen Null, wenn sich die Drehachsen zweier Wälzkörper und die Berührungstangente durch den Kontaktpunkt der beiden Wälzkörper in einem gemeinsamen Punkt treffen. Da sich während der Übersetzungsverstellung bei den oben genannten bisherigen Getrieben die Berührungstangente nicht verändert, gilt hier im Wesentlichen: Mit zunehmendem Winkel zwischen den Drehachsen erhöht sich die Relativbewegung zwischen den Wälzkörpern und das Bohr-/Wälzverhältnis nimmt zu. Zur Bestimmung des Bohr-/Wälzverhältnisses sei beispielsweise auf das Standardwerk "Dubbel - Taschenbuch für den Maschinenbau", Kapitel 7 (21. Auflage, Springer Verlag, 2005) verwiesen.

Stufenlose Planetengetriebe, bei denen die Wälzkörper kugelförmig ausgebildet sind, sind zum Beispiel aus den Druckschriften EP 0 528 381 A1 und EP 0 528 382 A1 der Fichtel & Sachs AG bekannt. Weitere stufenlose Planetengetriebe, die kugelförmige Wälzkörper verwenden, werden von der Firma Fallbrook Intellectual Property Company LLC in Fahrradnabenschaltungen unter dem Namen NuVinci angeboten. Beschrieben ist eine derartige Nabenschaltung mit Planetengetriebe beispielsweise in der US 8,641,572 B2.

Zur Verstellung der Übersetzung wird bei diesen Getriebeformen die Rotationsachse der kugelförmigen Wälzkörper um den Schwerpunkt der Kugeln gekippt, sodass sich die Wirkradien und somit die Drehgeschwindigkeiten der Übertragungselemente auf der An- und Abtriebsseite verändern. Herkömmlicherweise weisen die kugelförmigen Wälzkörper hierzu einen Schaft auf, der die Rotationsachse der Wälzkörper bildet. Die Kugeln stehen in reibschlüssiger Verbindung mit zwei Drehmomentübertragungselementen, die jeweils dem Getriebeeingang bzw. dem Getriebeausgang zugeordnet sind. Ein Stützelement stützt die kugelförmigen Wälzkörper gegenüber den Drehmomentübertragungselementen ab. Das Stützelement kann bezüglich der Getriebeachse axial verstellbar sein, wobei die axiale Verschiebung des Stützelements zum einen direkt auf die kugelförmigen Wälzkörper und zum anderen über Verstellelemente auf die Enden der Schäfte übertragen werden kann. Die axiale Verschiebung des Stützelements kann dadurch ein Verkippen der Rotationsachse um den Schwerpunkt der Kugel bewirken. Aufgrund des Anpresswinkels zwischen den Drehmomentübertragungselementen und den kugelförmigen Wälzkörpern entstehen neben Umfangskräften auch hohe Axialkräfte, die am Getriebegehäuse abgestützt werden.

Neben stufenlosen Planetengetrieben mit rein kugelförmigen Wälzkörpern sind Reibrad- bzw. Planetengetriebe bekannt, bei denen die Wälzkörper im Wesentlichen kugelförmig, aber mit einer großen, mittig umlaufenden Ausnehmung geformt sind. So beschreibt z. B. die DE 10 2008 058 074 A1 ein Planetengetriebe, bei dem ein solcher Wälzkörper zwischen einem als Hohlrad ausgebildeten Stützelement und zwei Drehmomentübertragungselementen gelagert ist. Die äußeren Flächen des Wälzkörpers, mit denen dieser in Kontakt mit den Drehmomentübertragungselementen stehen kann, entsprechen dabei im Wesentlichen zwei Kugelteilflächen einer Kugel, und im Bereich der umlaufenden Ausnehmung steht der Wälzkörper mit dem Stützelement in Kontakt. Auch dieser Wälzkörper weist einen Schaft auf, der die Rotationsachse des Wälzkörpers bildet, und um den er mittels zweier Wälzlager drehbar gelagert ist. Die Verstellung der Getriebeübersetzung erfolgt in diesem Fall über eine Verstelleinheit, die an mindestens einem äußeren Ende des Schafts angreift und den Wälzkörper um eine Achse kippt, die durch dessen Schwerpunkt verläuft.

Als Anpresswinkel ist der Winkel zwischen der Drehachse des Übertragungselements und einer Tangente an die Wälzkörpergeometrie durch die Kontaktstelle zwischen Wälzkörper und Übertragungselement definiert. Sowohl bei kugelförmigen als auch bei kugelähnlichen Wälzkörpern ist dieser Anpresswinkel verhältnismäßig recht steil. Die bezüglich der Getriebeachse axialen Kraftanteile zum Aufbau der notwendigen Normalkräfte in den Kontaktstellen sind infolge dessen recht groß. Insbesondere bei der Anwendung als Fahrradnabengetriebe sind die übertragenen Drehmomente groß (bis zu 250 Nm), die zur Verfügung stehenden Hebelarme jedoch aufgrund der Platzverhältnisse in einer Fahrradnabe sehr klein. Vor allem in den Berührflächen bzw. Kontaktstellen zwischen den Drehmomentübertragungselementen und den Wälzkörpern entstehen dadurch sehr hohe Normal- und Anpresskräfte, welche wiederum zu hohen Hertz'schen Pressungen in den Berührflächen führen. Die hohen Axialkräfte sind zum einen am Getriebegehäuse abzustützen, sodass dieses verhältnismäßig massiv auszuführen ist, was sich wiederum in einem erhöhten Gewicht des Getriebes niederschlägt. Zum anderen bewirken erhöhte Axialkräfte höhere Reibungsverluste in den Axiallagern zwischen Drehmomentübertragungselement und Gehäuse. Im Allgemeinen wirkt sich der durch die Kugelgeometrie vorgegebene Anpresswinkel daher nachteilig auf den Wirkungsgrad und das erreichbare Übersetzungsverhältnis des Planetengetriebes aus. Ein weiterer Nachteil des Planetengetriebes gemäß DE 10 2008 058 074 A1 ist, dass je nach Übersetzungsverstellung in den vier Kontaktstellen unterschiedliche Geschwindigkeiten auftreten und deshalb Schlupfverluste entstehen, weil keine Kräftesymmetrie vorliegt.

Des Weiteren steigt mit einer Verstellung von einem kleinen zu einem großen Übersetzungsverhältnis das Bohr-/Wälzverhältnis in den Reibflächen und damit die Verlustleistung des Getriebes überproportional an. Bei kugelförmigen oder kugelähnlichen Wälzkörpern werden diese zur Verstellung des Übersetzungsverhältnisses um den Schwerpunkt gekippt, wodurch der Winkel zwischen der Drehachse des Übertragungselements und der Drehachse des Wälzkörpers bei der Verstellung zu großen Übersetzungsverhältnissen hin stark zunimmt. Um sowohl den Verschleiß im Getriebe als auch die Wirkungsgradverluste zu reduzieren, wird der Kippwinkel der Rotationsachsen der Wälzkörper begrenzt, wodurch sich für das Übersetzungsverhältnis der Kugelgetriebe in der Regel eine Beschränkung auf unter 400 % ergibt. Die oben erwähnten NuVinci-Nabengetriebe ermöglichen beispielsweise eine Gesamtübersetzung von 330 % bis 380 %, während mit einer verzahnten Getriebevariante (z. B. Rohloff Speedhub) bis zu 525 % und bei Kettenschaltungen ca. 600 % möglich sind.

Stufenlose Planetengetriebe, bei denen die Wälzkörper als Doppelkegel ausgebildet sind, sollen wesentliche Nachteile der Kugelgetriebe überwinden. Derartige Doppelkegelgetriebe sind z. B. aus der DE 10 2013 223 381 A1 der Firma Shimano und aus der DE 10 2013 012 160 A1 bekannt. Die Doppelkegel weisen hierbei zwei gegenüberliegende Absätze auf, die eine Rotationsachse des Doppelkegels bilden und in Wälzlagern aufgenommen sind. Die Drehmomentübertragungselemente liegen in der Vertikalen versetzt zueinander an den Kegelflächen an. Eine Übersetzungsänderung wird hier durch Verlagerung der Reibflächen längs der Kegelmantelflächen erreicht. Gegenüber Kugelgetrieben ist das Bohr-/Wälzverhältnis hier bei Verstellung des Übersetzungsverhältnisses relativ konstant, wodurch die Wirkungsgradverluste reduziert werden. Zudem wirkt sich der günstigere Anpresswinkel zwischen den Wälzkörpern und den Drehmomentübertragungselementen günstig auf die Axialkräfte und somit den Reibungsverlust in den Axiallagern aus. Aufgrund dieser Faktoren ist eine Gesamtübersetzung von ungefähr 600 % bei einem Wirkungsgrad von ungefähr 90 % möglich.

Allerdings ist bei Doppelkegelgetrieben in Nabenausführung in der Regel eine zusätzliche formschlüssige Getriebestufe (z. B. ein Stirnradgetriebe) für die Drehrichtungsumkehr zwischen Getriebeeingang und Getriebeausgang erforderlich. Diese macht einige Vorteile der stufenlosen Planetengetriebe zunichte und wirkt sich wiederum nachteilig auf den Gesamtwirkungsgrad des Getriebes sowie auf dessen Komplexität, Kosten und vor allem das Gewicht aus.

In einer weiteren Bauform eines stufenlosen Planetengetriebes sind die Wälzkörper im Wesentlichen walzenförmig ausgebildet. Ein solches Getriebe ist beispielsweise aus der US 2,359,540 (bzw. CH 265 617 A) bekannt. Die hierin offenbarten Wälzkörper weisen zwei in Längsrichtung gegenüberliegende und nach außen gewölbte Abschnitte, eine nach innen gewölbte, mittige Ausnehmung sowie in Verlängerung in Längsrichtung der Wälzkörper jeweils einen Wellenabschnitt auf, der mittels eines Wälzlagers im Getriebegehäuse aufgenommen ist. Die beiden nach außen gewölbten Abschnitte des Wälzkörpers stehen mit dem Drehmomentübertragungselementen in Kontakt, während ein Stützelement an der nach innen gewölbten, umlaufenden Ausnehmung angreift. Die Kontaktflächen der Übertragungselemente sind kegelförmig ausgebildet, sodass sie punktförmig mit den gewölbten Abschnitten der Wälzkörper in Kontakt stehen. Das Stützelement ist mittels eines Stellmechanismus axial verschiebbar, sodass eine axiale Verschiebung des Stützelements eine axiale Verschiebung der Wälzkörper bewirkt. Deshalb muss die umlaufende Ausnehmung am Wälzkörper eine deutliche Kontur aufweisen, weil eine axiale Verschiebung sonst nicht möglich wäre. Durch diese axiale Verschiebung der Wälzkörper gleiten die nach außen gewölbten Abschnitte derselben an den kegelförmigen Abschnitten der Übertragungselemente entlang, wodurch sich die Wirkradien und die Übersetzung des Getriebes ändern.

Aufgrund der gewählten Wälzkörpergeometrie fallen auch hier die Anpresswinkel zwischen Wälzkörper und Übertragungselement relativ flach aus, sodass geringere Axialkräfte als bei kugelförmigen Wälzkörpern auftretenden. Zudem ist keine zusätzliche formschlüssige Getriebestufe notwendig, wie dies beim Doppelkegelgetriebe der Fall ist. Da die Wälzkörper jedoch axial auf den Übertragungselementen verschoben werden, ist bei dieser Getriebebauform vor allem in axialer Richtung viel Bauraum vorzusehen, um die Übersetzung des Getriebes in ausreichendem Maße verändern zu können. Neben dem benötigten Bauraum wirkt sich die erhebliche Größe der Übertragungselemente vor allem auch negativ auf das Gewicht des Getriebes aus. Da es zwischen den kegelförmigen Flächen der Übertragungselemente und den nach außen gewölbten Flächen der Wälzkörper nur zu einer Punktberührung kommen kann, treten an den Kontaktstellen sehr hohe Hertz'sche Pressungen auf, die einen erhöhten Verschleiß zur Folge haben. Wie weiterhin zu erkennen ist, weisen die nach außen gekrümmten Abschnitte der Wälzkörper eine kurvenförmige Kontur auf, die die Herstellung erschwert und somit auch die Kosten eines Getriebes erhöht. Zudem ist anzumerken, dass sich ein derartiges Getriebe nur sehr schwer unter Last schalten lässt, da die Dreipunktauflage der außenliegenden Kontaktstellen zur abstützenden Kontaktstelle des Planetenwälzkörpers in den meisten Übersetzungsstellungen keine Symmetrie bildet.

Die WO 2008/040281 A1 offenbart ein Planetengetriebe, mit den vorkennzeichnenden Merkmalen des Anspruchs 1, mit kontinuierlich veränderbarer Übersetzung, wobei die Übersetzungsänderung durch axiale Verschiebung des Hohlrads bezogen auf die Sonnenräder erfolgt.

Es ist folglich festzustellen, dass die verschiedenen Bauformen stufenloser Planetengetriebe bzw. Reibradgetriebe, die insbesondere auch für die Verwendung als Fahrradnabengetriebe geeignet sind, erheblichen Einschränkungen unterworfen sind, während einzelne Bauformen sich nur einzelne Vorteile zunutze machen können.

Es ist daher Aufgabe der vorliegenden Erfindung, ein stufenloses Planetengetriebe bereitzustellen, das einen erhöhten Wirkungsgrad sowie einen hohen Gesamtübersetzungsbereich ermöglicht und zugleich einen kompakten und einfachen Aufbau und eine verhältnismäßig kostengünstige Herstellung erlaubt. Insbesondere ist vorgesehen, ein stufenloses Planetengetriebe zu schaffen, das einen Wirkungsgrad von über 90 % und einen Gesamt-übersetzungsbereich von über 600 % bietet.

Diese Aufgabe wird durch die Merkmale des Anspruchs 1 bzw. des Anspruchs 14 gelöst.

Erfindungsgemäß umfasst das stufenlose Planetengetriebe ein erstes und ein zweites Übertragungselement, die um eine Getriebeachse drehbar und axial in einem festen Abstand zueinander angeordnet sind, sowie mindestens ein Stützelement, das im Wesentlichen radial zur Getriebeachse festgelegt ist, und mindestens einen länglichen Planetenwälzkörper, der rotationssymmetrisch um seine Längsachse und um diese drehbar ausgebildet ist. Dabei weist das erste Übertragungselement mindestens eine erste Kontaktstelle, das zweite Übertragungselement mindestens eine zweite Kontaktstelle und das mindestens eine Stützelement mindestens eine dritte Kontaktstelle auf, wobei in den Kontaktstellen jeweils eine reibschlüssige Rollverbindung mit einem Planetenwälzkörper besteht, sodass der mindestens eine Planetenwälzkörper um die Getriebeachse bewegbar zwischen dem ersten und dem zweiten Übertragungselement und dem mindestens einen Stützelement aufgenommen ist. Eine Verschiebung des Mittelpunkts des mindestens einen Planetenwälzkörpers bewirkt dabei eine Änderung der Übersetzungen des Planetengetriebes. Das mindestens eine Stützelement ist erfindungsgemäß im Wesentlichen axial zur Getriebeachse festgelegt.

Auf diese Weise wird eine neue Getriebeform für stufenlose Planetengetriebe bereitgestellt, mit der es möglich ist, die Nachteile der herkömmlichen stufenlosen Planetengetriebe bzw. Reibringgetriebe zu überwinden. Die Vorteile des erfindungsgemäßen Planetengetriebes ergeben sich insbesondere in Verbindung mit den besonders bevorzugten Ausführungsformen der Planetenwälzkörper.

Vorteilhafterweise bilden das erste Übertragungselement, das zweite Übertragungselement und das mindestens eine Stützelement eine Zwangsführung für den mindestens einen Planetenwälzkörper, sodass der Mittelpunkt des mindestens einen Planetenwälzkörpers bei der Verschiebung des Planetenwälzkörpers zum Zwecke der Übersetzungsänderung eine Kreisbahn beschreibt. Vorzugsweise definiert die Längsachse des mindestens einen Planetenwälzkörpers eine Längsrichtung desselben und der mindestens eine Planetenwälzkörper weist zwei in Längsrichtung gegenüberliegende Seitenabschnitte auf, deren Mantelflächen in Längsrichtung konvex (von der Längsachse gesehen nach außen) gekrümmt sind, sodass der Planetenwälzkörper zu zwei in Längsrichtung gegenüberliegenden Endabschnitten des Planetenwälzkörpers und zur Längsachse hin verjüngt ausgebildet ist. Besonders bevorzugt weisen dabei die konvexen Krümmungen der Mantelflächen der zwei Seitenabschnitte in Längsrichtung jeweils einen konstanten Radius auf.

Gegenüber Reibradgetrieben mit kugelförmigen oder kugelähnlichen Wälzkörpern bietet das erfindungsgemäße Planetengetriebe in seinen bevorzugten Ausführungsformen den entscheidenden Vorteil, dass die Bohr-/Wälzverhältnisse in den Reibflächen zwischen den Wälzkörpern und den zwei Übertragungselementen auch bei einer Verstellung von einem kleinen zu einem größeren Übersetzungsverhältnis deutlich geringer ausfallen und somit der Nutzreibwert gesteigert werden kann. Damit einhergehend entstehen geringere Verluste und Verschleißerscheinungen und der Wirkungsgrad des Getriebes wird erhöht. Erreicht werden diese Vorteile im Wesentlichen durch die längliche, im Wesentlichen walzenförmige Geometrie des Planetenwälzkörpers und durch das Verschieben des Mittelpunkts der Wälzkörper zum Verstellen der Übersetzung. Da es bei dem erfindungsgemäßen Getriebe in Verbindung mit der bevorzugten Wälzkörpergeometrie möglich ist, dass das Verschieben des Mittelpunkts um ein Zentrum erfolgt, das möglichst weit außerhalb der Planetenwälzkörper liegt, wird erreicht, dass auch bei großen Übersetzungsverhältnissen der Winkel zwischen der Drehachse der Übertragungselement und der Rotation- bzw. Längsachse der Planetenwälzkörper möglichst klein bleibt. Ein geringes Bohr-/Wälzverhältnis und damit geringere Verluste sind die Folge. Zudem ist der aus der Wälzkörpergeometrie resultierende Winkel zwischen der Getriebeachse und der Tangente an die Planentenwälzkörperkontur in den Kontaktstellen zu den Übertragungselementen (im Folgenden auch Anpresswinkel) deutlich kleiner. Dies wirkt sich positiv auf die auftretenden Axialkräfte aus, die am Getriebegehäuse abgestützt werden müssen.

Gegenüber bisher bekannten Reibradgetrieben mit kugelähnlichen oder auch walzenförmigen Wälzkörpern, bei denen die Wälzkörper durch die Verschiebung des Stützelements gekippt bzw. axial verschoben werden, wird dieser Effekt weiterhin dadurch unterstützt, dass die Verschiebung der Planetenwälzkörper nicht durch das Stützelement erfolgt. Das Stützelement ist erfindungsgemäß axial zur Getriebeachse festgelegt. Eine mittig umlaufende Ausnehmung des Planetenwälzkörpers kann infolge dessen deutlich flacher ausgebildet sein, da kein Angreifen des Stützelements zum Verschieben der Wälzkörper erforderlich ist. Hierdurch wird eine noch flachere Gestaltung der Planetenwälzkörper ermöglicht, wodurch die Anpresswinkel zwischen den Planetenwälzkörpern und den Übertragungselementen der auftretenden Axialkräfte weiter verringert werden können. Aufgrund der im Wesentlichen axial ortsfest angeordneten ersten und zweiten Kontaktstellen können zudem die Übertragungselemente sehr schmal ausgebildet werden, wodurch der von diesen in Anspruch genommene Bauraum und ihr Gewicht reduziert werden.

Entscheidend ist, dass aufgrund der axial in festem Abstand zueinander angeordneten Übertragungselemente und der konstanten Krümmung der Seitenabschnitte der Planetenwälzkörper in Längsrichtung die Anpresswinkel zum einen in jeder Winkelposition der Planetenwälzkörper unverändert bleiben und zum anderen vorzugsweise der Anpresswinkel in der ersten Kontaktstelle gleich dem Anpresswinkel in der zweiten Kontaktstelle ist. Auch bei einer Übersetzungsverstellung stehen auf diese Weise in jeder Winkelposition der Planetenwälzkörper in den ersten und zweiten Kontaktstellen auftretenden Axial- und Radialkräfte im Gleichgewicht. Dieses Kräftegleichgewicht wirkt sich vorteilhaft auf die Gestaltung des gesamten Getriebes, insbesondere des Getriebegehäuses aus, verringert den Verschleiß und bietet insbesondere den Vorteil, dass sich die Axialkräfte im Wesentlichen aufheben und das Getriebe daher auch unter Last sehr gut schaltbar ist. Ein asymmetrisches Kräfteverhältnis zwischen den auftretenden Kräften in den ersten und zweiten Kontaktstellen hat stets einen erhöhten Widerstand beim Schalten unter Last zur Folge.

Insgesamt ist das erfindungsgemäße Getriebe insbesondere in den bevorzugten Ausführungen bezüglich der Bohr-/Wälzverhältnisse in den Kontaktstellen der Planetenwälzkörper und der resultieren (Axial-) Kräfte derart optimiert, dass eine Begrenzung des Übersetzungsverhältnisses nicht notwendig erscheint. Gegenüber Reibringgetrieben mit kugelförmigen oder kugelähnlichen Wälzkörpern resultiert daraus eine signifikant höhere mögliche Gesamtübersetzung. Gegenüber bisherigen Reibringgetrieben mit im Wesentlichen walzenförmigen Wälzkörpern werden vor allem der Wirkungsgrad und der Schaltkomfort erhöht.

Vorzugsweise weist der mindestens eine Planetenwälzkörper in Längsrichtung mittig eine umlaufende Ausnehmung auf. In dieser befindet sich die dritte Kontaktstelle zwischen Planetenwälzkörper und Stützelement. Bevorzugt ist dabei die Mantelfläche der umlaufenden Ausnehmung in Längsrichtung konkav (von der Längsachse gesehen nach innen) gekrümmt, wobei diese konkave Krümmung in Längsrichtung einen konstanten Radius aufweist. Durch die Krümmung der Seitenabschnitte und der umlaufenden Ausnehmung mit konstantem Radius ist der Planetenwälzkörper besonders einfach herzustellen, was sich insbesondere vorteilhaft auf die Herstellungskosten auswirkt. Idealerweise haben die Radien der Krümmung des ersten und zweiten Seitenabschnitts und der Krümmung der umlaufenden Ausnehmung, in einem Längsschnitt entlang der Längsachse betrachtet, denselben Mittelpunkt. Aus dieser besonders vorteilhaften Gestaltung des Planetenwälzkörpers resultiert die Verschiebung des Mittelpunkts des Planetenwälzkörpers auf einer Kreisbahn (deren Mittelpunkt ebenfalls in dem Mittelpunkt der beschriebenen Radien liegt) bei der zwangsgeführten Verschiebung des Planetenwälzkörpers zur Änderung der Übersetzung des Getriebes.

In einer Ausführungsform des erfindungsgemäßen stufenlosen Planetengetriebes weist das mindestens eine Stützelement genau eine dritte Kontaktstelle auf, die auf einer Symmetrieachse liegt, zu der die mindestens eine erste Kontaktstelle und die mindestens eine zweite Kontaktstelle achsensymmetrisch angeordnet sind. Die erste, zweite und dritte Kontaktstelle bilden dadurch eine Dreipunktauflage für einen Planetenwälzkörper. Dies unterstützt das symmetrische Kräfteverhältnis besonders vorteilhaft, da die in den ersten und zweiten Kontaktstellen auftretenden Radialkräfte mittig in der symmetrisch dazu angeordneten dritten Kontaktstelle abgestützt werden.

In einer weiteren Ausführungsform des Planetenwälzkörpers ist die umlaufende Ausnehmung im Querschnitt V-förmig ausgebildet. Vorzugsweise ist dann die Mantelfläche des mindestens einen Stützelements in axialer Richtung der Getriebeachse konvex und mit einem konstanten Radius gekrümmt. In diesem Fall weist das mindestens eine Stützelement zwei dritte Kontaktstellen auf, sodass die erste, zweite und die zwei dritten Kontaktstellen eine Vierpunktauflage für einen Planetenwälzkörper bilden. Durch die zusätzliche Kontaktstelle verringert sich die in jeder einzelnen dritten Kontaktstelle auftretende Flächenpressung zwischen den Planetenwälzkörpern und dem Stützelement. Der Verschleiß kann dadurch reduziert werden.

In einer alternativen Ausführungsform kann das mindestens eine Stützelement mehrteilig ausgebildet sein. Dadurch ist es möglich, das Stützelement derart zu gestalten, dass auch bei einem Planetenwälzkörper, dessen umlaufende Ausnehmung einen konstanten Radius in Längsrichtung aufweist, eine Vierpunktauflage zu realisieren. Auch hier wird dadurch die Flächenpressung in den dritten Kontaktstellten reduziert. Gegenüber der im Querschnitt V-förmigen umlaufenden Ausnehmung weist diese Variante jedoch den erheblichen Vorteil auf, dass die zwei dritten Kontaktstellen symmetrisch zur Symmetrieachse zwischen der ersten und zweiten Kontaktstelle angeordnet sein können. Es ist somit wieder ein symmetrisches Kräfteverhältnis hergestellt. Im Hinblick auf die Verstellung der Übersetzung des Planetengetriebes unter Last ist stets eine symmetrische Kraftverteilung anzustreben, d. h. bei einer Dreipunktauflage ebenso wie bei einer Vierpunktauflage.

Vorzugweise umfasst das Planetengetriebe weiterhin eine erste und eine zweite drehmomentabhängige Anpressvorrichtung, wobei jeweils eine Anpressvorrichtung mit dem ersten und dem zweiten Übertragungselement in Verbindung steht und die zwei Anpressvorrichtungen ein Anpressen des ersten und des zweiten Übertragungselements an den mindestens einen Planetenwälzkörper bewirken. Durch diese Anpressmechanismen werden die Übertragungselemente abhängig vom Drehmoment an die Planetenwälzkörper angepresst, um ein möglichst schlupffreies Übertragen der Drehmomente zwischen den Übertragungselementen und den Planetenwälzkörpern zu gewährleisten. Vorzugsweise weisen die Anpressvorrichtungen eine gewisse Vorspannung auf, sodass die Übertragungselemente auch im Ruhezustand des Getriebes ausreichend an die Planetenwälzkörper angepresst sind und das Anlaufen des Getriebes möglichst schlupffrei erfolgen kann. Die Vorspannung kann beispielsweise durch die Verwendung von Federn oder Magneten erreicht werden.

Zur optimalen Veränderung des Übersetzungsverhältnisses umfasst das Planetengetriebe weiterhin eine Verstellvorrichtung zum Verschieben des mindestens einen Planetenwälzkörpers, wobei die Verstellvorrichtung an mindestens einem Endabschnitt des mindestens einen Planetenwälzkörpers angreift. Eine derartige Verstellvorrichtung ist einfach aufgebaut und eignet sich besonders gut dazu, eine entsprechende Stellbewegung bei im Wesentlichen feststehenden Übertragungselementen und feststehendem Stützelement auf die Planetenwälzkörper zu übertragen.

Das erfindungsgemäße Verfahren zum Ändern der Übersetzung eines stufenlosen Planetengetriebes umfasst die Schritte:
a. Erzeugen einer Stellbewegung an einem Eingang einer Verstellvorrichtung;
b. Übertragen der Stellbewegung auf mindestens einen Endabschnitt mindestens eines Planetenwälzkörpers mittels der Verstellvorrichtung;
c. Verschieben des Mittelpunkts des mindestens einen Planetenwälzkörpers auf einer Kreisbahn aufgrund der Stellbewegung und damit Ändern der Übersetzung.

Auf diese Weise können die oben beschrieben Vorteile eines erfindungsgemäßen stufenlosen Planetengetriebes optimal genutzt werden und die Übersetzung kann auch unter Last besonders einfach eingestellt werden.

Weitere Merkmale und Vorteile der vorliegenden Erfindung ergeben sich aus der nachfolgenden Beschreibung unter Bezugnahme auf die Zeichnungen.
- Fig. 1a: zeigt eine schematische Schnittansicht der wesentlichen Komponenten einer ersten Ausführungsform des erfindungsgemäßen Planetengetriebes;
- Fig. 1b: zeigt eine schematische Schnittansicht der wesentlichen Komponenten einer zweiten Ausführungsform des erfindungsgemäßen Planetengetriebes;
- Fig. 2: zeigt eine schematische Schnittansicht der wesentlichen Komponenten einer dritten Ausführungsform des erfindungsgemäßen Planetengetriebes;
- Fig. 3: zeigt eine schematische Schnittansicht der wesentlichen Komponenten einer vierten Ausführungsform des erfindungsgemäßen Planetengetriebes;
- Fig. 4: zeigt eine schematische Schnittansicht der wesentlichen Komponenten einer fünften Ausführungsform des erfindungsgemäßen Planetengetriebes;
- Fig. 5: zeigt eine Schnittansicht nach Fig. 1a, aus der die Kräfteverhältnisse zwischen den einzelnen Komponenten hervorgehen;
- Fig. 6a, b, und c: zeigen drei Schnittansichten nach Fig. 1a mit den Planetenwälzkörpern in jeweils unterschiedlichen Winkelpositionen (Übersetzung - Übertragung - Untersetzung);
- Fig. 7a, b: zeigen jeweils schematisch eine Verstellvorrichtung in einer Front- und Seitenansicht;
- Fig. 8a, b: zeigen jeweils eine isometrische Ansicht eines Nabengetriebes ohne Getriebegehäuse, Übertragungselemente und Anpressvorrichtungen in zwei verschiedenen Stellungen;
- Fig. 9: zeigt eine Schnittansicht durch ein erfindungsgemäßes stufenloses Planetengetriebe, das als Fahrradnabengetriebe ausgebildet ist.

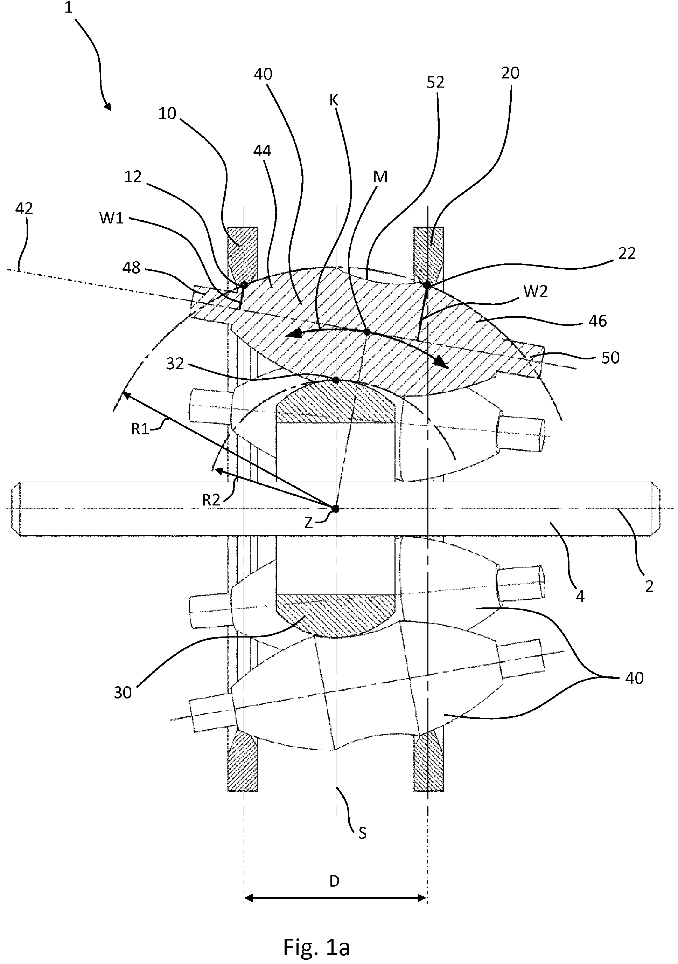

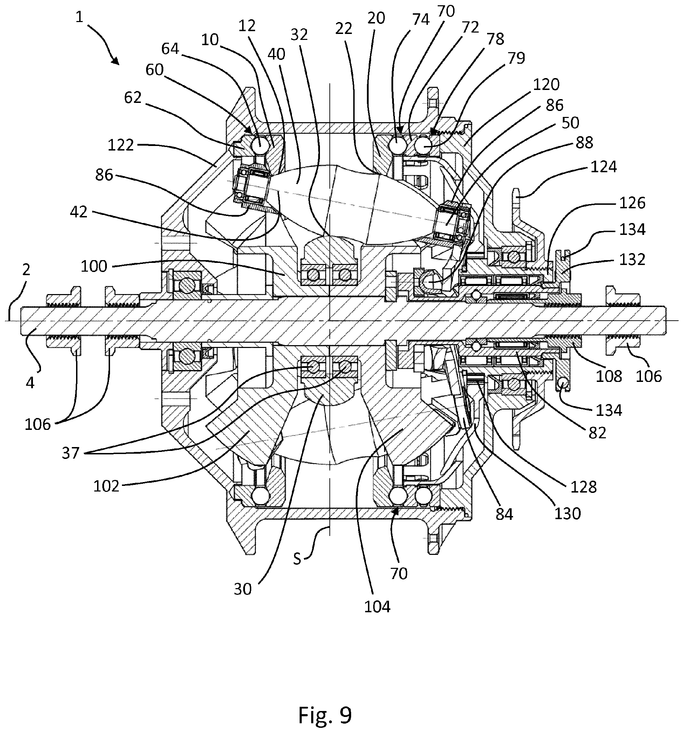

Fig. 1a zeigt eine schematische Schnittansicht der für die Funktion des Getriebes wesentlichen Komponenten einer ersten Ausführungsform des stufenlosen Planetengetriebes. Diese bilden die Grundlage des Getriebes, das in diversen Bereichen einsetzbar und entsprechend an die vorliegenden Umstände anzupassen ist. Ein Ausführungsbeispiel des erfindungsgemäßen Getriebes als komplettes Fahrradnabengetriebe ist in Bezug auf Fig. 9 beschrieben.

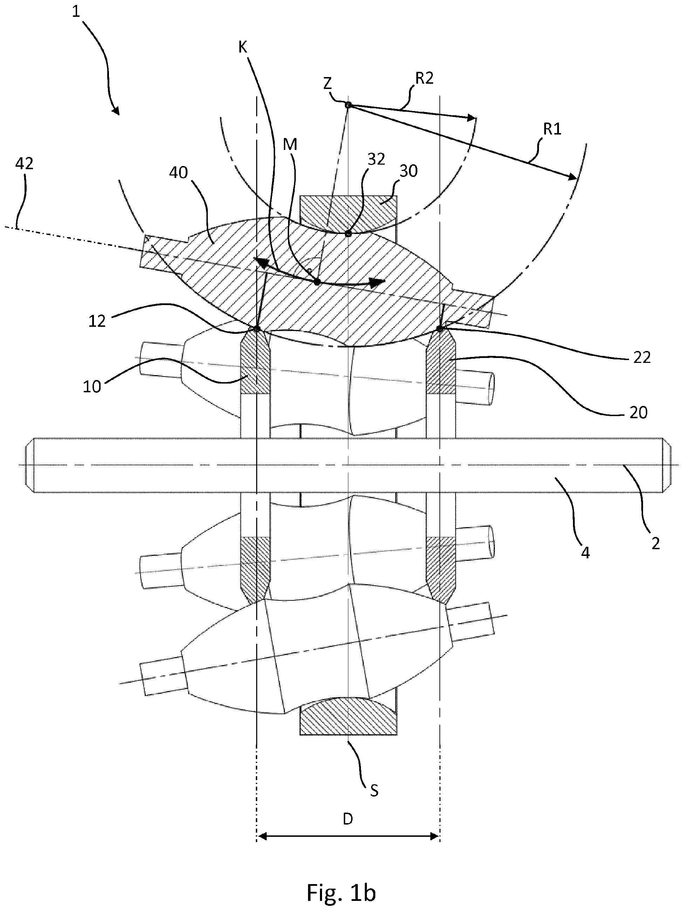

In den Figuren 1 bis 6 und 9 ist jeweils eine Schnittansicht dargestellt. Dabei ist die Schnittebene definiert durch die Geraden der Getriebeachse 2 und der Längsachse 42 eines Planetenwälzkörpers 40.

Fig. 1a zeigt eine Getriebeachse 2, die beispielsweise - aber nicht zwingend - als durchgehende Getriebewelle 4 ausgebildet sein kann, und um die ein erstes Übertragungselement 10, ein zweites Übertragungselement 20, mindestens ein Planetenwälzkörper 40 und ein Stützelement 30 angeordnet sind. Die Übertragungselemente 10, 20 sind als Reibringe ausgebildet und drehbar um die Getriebeachse 2 gelagert. Ein zu übertragendes Drehmoment wird an einem Getriebeeingang auf ein diesem zugeordnetes Übertragungselement 10 oder 20, von diesem über mindestens einen Planetenwälzkörper 40 auf das andere der Übertragungselemente 10 oder 20 und von dort schließlich auf ein dem Getriebeausgang zugeordnetes Element übertragen. Den Getriebeeingang bildet beispielsweise ein Kettenritzel, das von einer Fahrradkette angetrieben wird, wobei dem Getriebeausgang in diesem Fall das Nabengehäuse und das damit verbundene Laufrad zugeordnet sind.

Der mindestens eine Planetenwälzkörper 40 ist länglich, rotationssymmetrisch um seine Längsachse 42 und um diese drehbar ausgebildet. Ein Planetenwälzkörper 40 steht jeweils in einer ersten Kontaktstelle 12 mit dem ersten Übertragungselement 10, in einer zweiten Kontaktstelle 22 mit dem zweiten Übertragungselement 20 und in mindestens einer dritten Kontaktstelle 32 mit dem Stützelement 30 in reibschlüssiger Rollverbindung. Das bedeutet, dass ein Drehmoment von einem als Reibring ausgebildeten Übertragungselement 10, 20 durch Kraftschluss auf den Planetenwälzkörper 40 übertragen wird und umgekehrt. Die Kontaktstellen 12, 22, 32 können dabei abhängig von der Geometrie der in Verbindung stehenden Elemente als Kontaktpunkt, Kontaktlinie oder auch Kontaktfläche auftreten. Insbesondere bei hohen Pressungen werden die Elemente in den Kontaktstellen derart verformt, dass beispielsweise eine Kontaktfläche mit ellipsenförmigem Umriss entsteht. Eine Kontaktstelle 12, 22, 32 ist aber auch dann gegeben, wenn zwischen den Übertragungselementen 10, 20 bzw. dem Stützelement 30 und dem Planetenwälzkörper ein Spalt vorhanden ist. Üblicherweise ist das Getriebe in einem Gehäuse aufgenommen, das mit einem speziellen Reibradöl gefüllt ist. Derartige Öle ermöglichen eine Kraftübertragung zwischen den Reibelementen, wobei zugleich ein Spalt in der Größenordnung kleiner als 1 µm vorgesehen sein kann. Die auftretenden Pressungen in den Kontaktstellen und damit verbunden der Verschleiß der Elemente können dadurch reduziert werden.

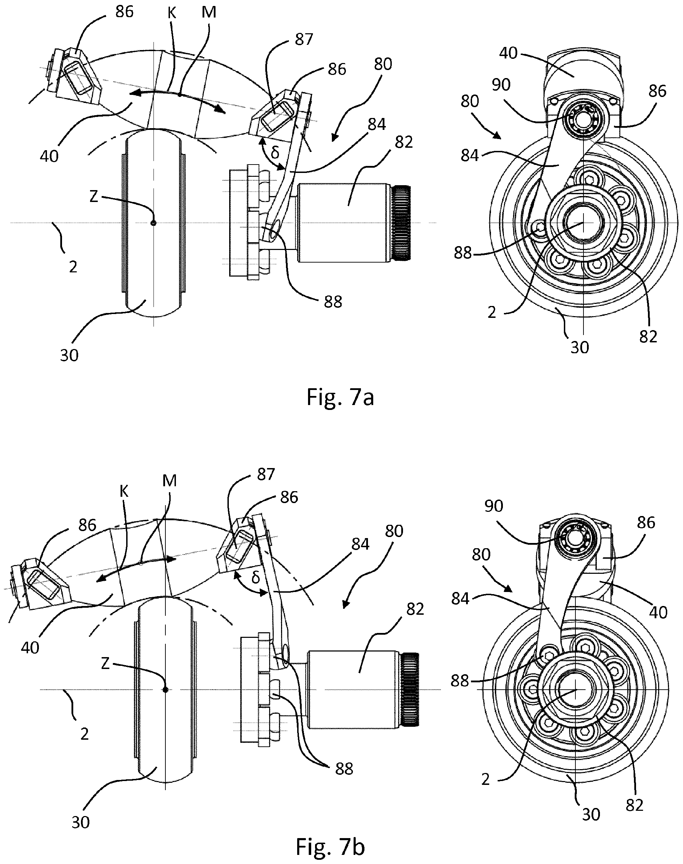

Das Übersetzungsverhältnis des Planetengetriebes 1 ist definiert als das Verhältnis der Wirkradien zueinander. Die Wirkradien sind wiederum definiert als durch die Kontaktstellen 12, 22 verlaufende und auf die Längsachse 42 des Planetenwälzkörpers 40 senkrecht stehende Strecken. Beispielsweise ergibt sich der Wirkradius W1 zwischen der ersten Kontaktstelle 12 und der Längsachse 42 des Planetenwälzkörpers 40 und der Wirkradius W2 zwischen der Kontaktstelle 22 und der Längsachse 42 des Planetenwälzkörpers 40. Zur Veränderung des Übersetzungsverhältnisses werden die Planetenwälzkörper 40 verschoben. Diese Verschiebung setzt sich aus einer radialen und einer axialen (bezüglich der Getriebeachse 2) Bewegungskomponente zusammen, so dass sich der Mittelpunkt M des Planetenwälzkörpers 40 bei Verschiebung auf einer Kreisbahn K bewegt. In Bezug auf Fig. 1a bedeutet dies, dass der Mittelpunkt M in der Zeichenebene verschoben wird. Die radiale Bewegungskomponente wird dem mindestens einen Planetenwälzkörper 40 dabei von einer Verstellvorrichtung 80, wie sie beispielsweise aus Fig. 7 hervorgeht, aufgezwungen. Die axiale Bewegungskomponente resultiert aus der Zwangsführung der Planetenwälzkörper 40 durch die ersten und zweiten Kontaktstellen 12, 22 bei radialer Verschiebung eines Endabschnitts 48, 50 der Planetenwälzkörper 40.

Insgesamt kann der Planetenwälzkörper 40 um seine Längsachse 42 rotieren und zur Verstellung der Übersetzung verschoben werden. Es versteht sich, dass sich die Beschreibung der Verschiebung zum Zwecke einer Änderung der Übersetzung anhand der Fig. 1a auf die darin dargestellte Schnittansicht bezieht, und sich die Bewegungen bzw. Bewegungsbahnen beim Betrieb des erfindungsgemäßen Getriebes überlagern.

Die Vorteile des erfindungsgemäßen Planetengetriebes 1 werden insbesondere durch die besonders bevorzugte geometrische Gestaltung der Planetenwälzkörper 40 ermöglicht. In Fig. 1a ist ein Planetenwälzkörper 40 im Querschnitt durch seine Längsachse 42 dargestellt. Es ist dabei zu erkennen, dass der Planetenwälzkörper 40 eine längliche, im Wesentlichen walzenförmige, bauchige Gestalt hat. Der Planetenwälzkörper 40 ist dabei rotationssymmetrisch um eine Längsachse 42 ausgebildet und weist zwei in Längsrichtung, die durch die Längsachse 42 definiert ist, gegenüberliegende Seitenabschnitte 44, 46 sowie zwei in Längsrichtung gegenüberliegende Endabschnitte 48, 50 auf. Mittig zwischen den beiden Seitenabschnitten 44, 46 ist eine umlaufende Ausnehmung 52 ausgebildet. Die Endabschnitte 48, 50 sind vorzugsweise als zylindrische Wellenabschnitte integral mit dem Planetenwälzkörper 40 ausgebildet. Es kann aber auch eine separate Welle oder Achse in einer Durchgangsbohrung der Planetenwälzkörper fest oder drehbar, beispielsweise mittels Wälzlagern, gelagert sein, wobei die zwei Endabschnitte 48, 50 durch zwei aus dem Planetenwälzkörper 40 herausragenden Abschnitte der Welle gebildet sind. Ebenso ist es denkbar, einen Endabschnitt 48 oder 50 integral mit dem Planetenwälzkörper 40 auszubilden und den anderen der Endabschnitte 48 oder 50 mittels einer in einer Öffnung des Planetenwälzkörpers 40 gelagerten Achse zu bilden.

Besonders bevorzugt ist nun, dass die Mantelflächen der Seitenabschnitte 44, 46 in Längsrichtung konvex gekrümmt sind, so dass der Planetenwälzkörper 40 zu den Endabschnitten 48, 50 und zur Längsachse 42 hin verjüngt ausgebildet ist. Idealerweise weisen die konvexen Krümmungen der Mantelflächen der zwei Seitenabschnitte 44, 46 in Längsrichtung einen konstanten Radius R1 auf. Die Mantelfläche der umlaufenden Ausnehmung 52 ist bevorzugt in Längsrichtung konkav gekrümmt, wobei diese konkave Krümmung in Längsrichtung einen konstanten Radius R2 aufweist. Idealerweise weisen die Radien R1 der Seitenabschnitte 44, 46 und der Radius R2 der umlaufenden Ausnehmung 52 einen gemeinsamen Mittelpunkt Z auf. Es sei darauf hingewiesen, dass die Krümmung einer Fläche durch mindestens zwei Radien definiert ist, der Radius der Krümmung der Mantelflächen der Seitenabschnitte 44, 46 aufgrund der Rotationssymmetrie des Planetenwälzkörpers jedoch zwangsläufigen einen konstanten Radius aufweist und daher nicht näher betrachtet wird.

Erfindungsgemäß sind die Übertragungselemente 10, 20 in einem festen Abstand D zueinander angeordnet, wobei eine Symmetrieachse S definiert ist, zu der die erste Kontaktstelle 12 und die zweite Kontaktstelle 22 achsensymmetrisch angeordnet sind. Es versteht sich, dass bei der Betrachtung der Kontaktstellen aller Planetenwälzkörper 40 die Symmetrieachse S eine zur Zeichenebene senkrechte Symmetrieebene bildet. Da sowohl die Übertragungselemente 12, 22 als auch das Stützelement 30 im Wesentlichen ortsfest angeordnet sind, sind auch die Kontaktstellen 12, 22 und 32 im Wesentlichen in axialer Richtung ortsfest. Es versteht sich, dass die Kontaktstellen 12, 22, 32 bei der Drehung der Elemente umlaufend auf die jeweiligen Elemente abgebildet werden. "Im Wesentlichen in axialer Richtung ortsfest" bedeutet in diesem Fall, dass die Übertragungselemente 10, 12 von drehmomentabhängigen Anpressmechanismen an die Planetenwälzkörper 40 gepresst werden, so dass die Übertragungselemente 10, 12 eine sehr geringe axiale Verschiebung erfahren. Diese liegt in der Regel im Bereich von einigen Zehntel Millimetern oder darunter und soll daher in diesem Fall nicht berücksichtigt werden.

Bei der Verschiebung der Planetenwälzkörper 40 zum Zwecke der Änderung der Übersetzung bewirken die Kontaktstellen 12, 22 und 32 nun eine Zwangsführung der Planetenwälzkörper 40. Aufgrund der konstanten Radien R1 und R2 und der im Wesentlichen axial ortsfesten Kontaktstellen 12, 22 erfolgt diese Verschiebung auf einer Kreisbahn, so dass auch der Mittelpunkt M des Planetenwälzkörpers 40 auf einer Kreisbahn K verschoben wird. Der Mittelpunkt dieser Kreisbahn K liegt ebenfalls im Mittelpunkt Z der Radien R1 und R2. Der Mittelpunkt Z bildet somit sowohl den geometrischen Mittelpunkt der Radien R1 und R2 sowie der Kreisbahn K bei Verschiebung des Mittelpunkts M und zugleich einen Drehpunkt, um den der mindestens eine Planetenwälzkörper 40 zur Änderung der Übersetzung des Getriebes 1 verschoben wird. Aufgrund der symmetrischen Anordnung der Übertragungselemente 10 und 12 sowie der konstanten Radien R1 und R2 liegt der Mittelpunkt bzw. der Drehpunkt Z stets auf der Symmetrieachse S. Im dargestellten Fall liegt der Mittelpunkt Z zudem auf der Getriebeachse 2, wobei dies, wie in Fig. 1b dargestellt ist, nicht zwingend erforderlich ist. Bevorzugt ist allerdings, dass der Drehpunkt Z möglichst weit außerhalb des Planetenwälzkörpers 40 liegt. Dies unterscheidet den erfindungsgemäßen Wälzkörper erheblich von z. B. kugelförmigen oder kugelähnlichen Wälzkörpern, bei denen der Drehpunkt bzw. die Drehachse stets durch den Wälzkörper selbst, in der Regel durch deren Schwer- bzw. Mittelpunkt verläuft. Je weiter der Drehpunkt Z außerhalb des Planetenwälzkörpers 40 liegt, desto geringer ist der Winkel zwischen der Getriebeachse 2 und der Rotations- bzw. Längsachse 42 der Planetenwälzkörper 40 auch im Bereich extremer Übersetzungen. Das Bohr-/Wälzverhältnis fällt demnach bei Änderungen der Übersetzung im Bereich extremer Übersetzungen entsprechend gering aus.

Fig. 1b zeigt eine alternative Ausführungsform des erfindungsgemäßen Getriebes 1, wobei das Stützelement 30 auf einer der Getriebeachse 2 abgewandten Seite des Planetenwälzkörpers 40 angeordnet ist. In diesem Fall sind das erste Übertragungselement 10 und das zweite Übertragungselement 20 auf einer der Getriebeachse 2 zugewandten Seite des Planetenwälzkörpers 40 angeordnet. Wie zu erkennen ist, liegt der Mittel- bzw. Drehpunkt Z in diesem Fall ebenfalls auf der der Getriebeachse 2 abgewandten Seite des Planetenwälzkörpers 40, außerhalb des Planetenwälzkörpers 40 und auf der Symmetrieachse S. Das Stützelement 30 kann bei der Ausführungsform nach Fig. 1b drehfest gelagert sein, während es in den übrigen Ausführungsformen drehbar z. B. mittels Radiallager auf der Getriebewelle 4 gelagert ist. Prinzipiell ist aber sowohl die drehfeste als auch die drehbare Anordnung des Stützelements 30 in allen Ausführungsformen des erfindungsgemäßen Getriebes möglich. Im Übrigen trifft auch hier die Beschreibung zu Fig. 1a zu.

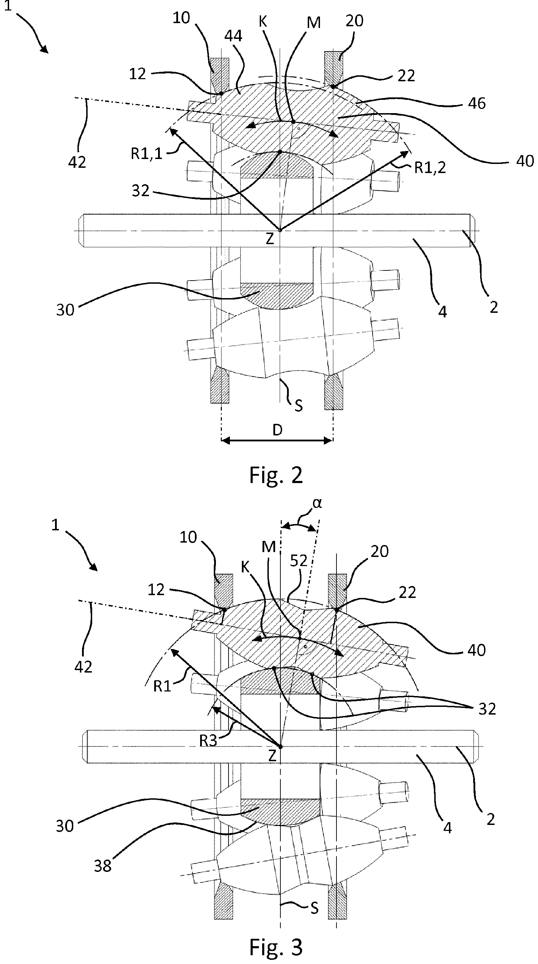

In Fig. 2 ist eine alternative Ausführungsform des Planetenwälzkörpers 40 dargestellt. Dabei weist die Krümmung der Mantelfläche des ersten Seitenabschnitts 44 in Längsrichtung einen ersten Radius R1,1 auf, der verschieden ist vom Radius R1,2 der Krümmung der Mantelfläche des zweiten Seitenabschnitts 46 in Längsrichtung. Beide Radien R1,1 und R1,2 sind konstant ausgebildet und haben vorzugsweise einen gemeinsamen Mittelpunkt Z auf der Symmetrieachse S. Es versteht sich, dass in diesem Fall die als Reibringe ausgebildeten Übertragungselemente 10, 20 unterschiedliche und an die Planetenwälzkörpergeometrie angepasste Durchgangsquerschnitte aufweisen. Dadurch wird weiter erreicht, dass sich der Mittelpunkt M des Planetenwälzkörpers 40 weiterhin bei Verstellung des Übersetzungsverhältnisses auf einer Kreisbahn K bewegt. Der Mittelpunkt M der Planetenwälzkörper 40 liegt stets auf der Längsachse 42 des Planetenwälzkörpers 40 und geometrisch mittig zwischen den in Längsrichtung gegenüberliegenden Endflächen. Es versteht sich auch, dass der Schwerpunkt des Planetenwälzkörpers bei einem derart ausgebildeten Planetenwälzkörper außerhalb des Mittelpunkts M, auf der Längsachse 42 und in Richtung des Seitenabschnitts mit größerem Radius verschoben liegt.

Die konstanten Radien R1 (bzw. R1,1 und R1,2) und R2 haben neben der vorteilhaften Bewegungsführung des Planetenwälzkörpers 40 den Vorteil, dass der Planetenwälzkörper besonders einfach hergestellt werden kann. Zum Beispiel können beim Schleifen der Planetenwälzkörper die konstanten Radien mit hoher Präzision und dennoch verhältnismäßig kostengünstig gefertigt werden.

Wie in der alternativen Ausführungsform nach Fig. 3 weiter zu sehen ist, kann die umlaufende Ausnehmung 52 aber auch einen im Wesentlichen V-förmigen Querschnitt aufweisen. Um dabei weiterhin die Bewegung des Mittelpunkts M der Planetenwälzkörper 40 auf einer Kreisbahn K zu ermöglichen, ist bei dieser Ausführungsform eine radial nach außen gerichtete Mantelfläche 38 des Stützelements 30 in Längsrichtung der Getriebeachse 2 mit einem konstanten Radius R3 gekrümmt. Diese Ausführungsform bietet den Vorteil, dass der Planetenwälzkörper 40 am Stützelement 30 auf zwei Kontaktstellen 32 abgestützt ist. Die auftretenden Radialkräfte werden somit auf diese beiden Kontaktstellen 32 verteilt, woraus eine geringere Flächenpressung in jeder einzelnen Kontaktstelle 32 resultiert. Dies wirkt sich vorteilhaft durch geringeren Verschleiß aus bzw. können die Elemente entsprechend der geringeren örtlichen Belastung dimensioniert werden. Wie allerdings auch in Fig. 3 zu sehen ist, sind bei dieser Ausführungsform die Kontaktstellen 32 nicht in jeder Winkelposition des Planetenwälzkörpers 40 symmetrisch zur Symmetrieachse S angeordnet. Dies hat in manchen Winkelpositionen ein unsymmetrisches Kräfteverhältnis in den Kontaktstellen 32 zur Folge. Dieses wirkt sich wiederum negativ auf die zur Verstellung des Übersetzungsverhältnisses notwendigen Kräfte und somit auf den Schaltkomfort aus. Die Winkelposition der Planetenwälzkörper ist dabei durch den Winkel α zwischen der Symmetrieachse S und der Verbindungslinie der Mittelpunkte M und Z definiert.

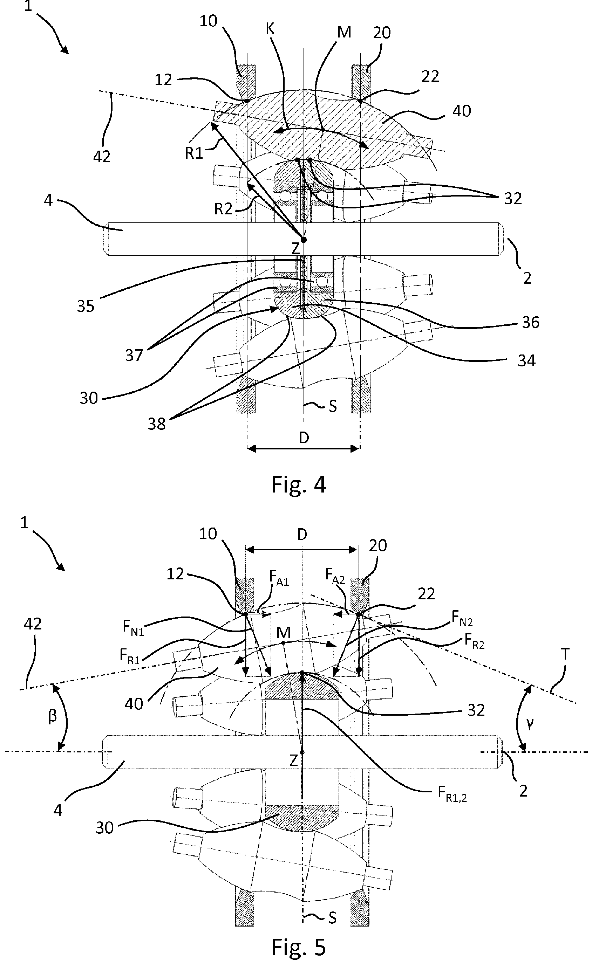

Vorzugsweise wird eine Vierpunktauflage für den Planetenwälzkörper 40 daher gemäß der Ausführungsform nach Fig. 4 realisiert. Hierbei ist das Stützelement 30 mehrteilig ausgebildet. Beispielsweise ist es mittig in eine erste Hälfte 34 und eine zweite Hälfte 36 geteilt, so dass die beiden Hälften 34, 36 des Stützelements 30 axial bezüglich der Getriebeachse 2 nebeneinander angeordnet sind. Zwischen den beiden Hälften 34, 36 des Stützelements 30 sind vorzugsweise Wälzkörper 35, z. B. in Form eines Nadel- oder Kugellagers, vorzusehen, um auftretende Relativbewegungen zwischen den beiden Hälften 34, 36 abzustützen. Beispielsweise kann aber auch ein Spalt zwischen den Hälften 34, 36 des Stützelements 30 vorgesehen sein, oder die Hälften 34, 36 können aus geeigneten Materialien gefertigt sein, die ein Abgleiten der beiden Hälften 34, 36 aneinander ermöglichen, sodass keine Wälzkörper 35 notwendig sind. Des Weiteren kann jede Hälfte 34, 36 des Stützelements 30 ein Wälzlager 37, z. B. ein Kugellager aufweisen, über welches das Stützelement 30 mit der Getriebewelle 4 oder anderen Elementen des Getriebes 1 verbunden ist, wie es z. B. unter Bezug auf Fig. 9 beschrieben ist.

Die Mantelflächen 38 des Stützelements 30 sind bei dieser Ausführungsform derart auszubilden, dass das Stützelement 30 zwei Kontaktstellen 32 zu jedem Planetenwälzkörper 40 aufweist. Ist der Konturverlauf der radialen Mantelfläche 38 der beiden Hälften 34, 36 des Stützelements 30 identisch bzw. achsensymmetrisch zur Symmetrieachse S, so sind auch die Kontaktstellen 32 achsensymmetrisch zur Symmetrieachse S angeordnet. Hierdurch wird ein symmetrisches Kraftverhältnis in den Kontaktstellen 32 erreicht, welches sich zusammen mit den symmetrischen Kraftverhältnis in den Kontaktstellen 12, 22 vorteilhaft auf die zur Einstellung der Übersetzung benötigte (Hand-) Kraft und somit den Schaltkomfort auswirkt. Zudem wird die Flächenpressung in jeder der beiden Kontaktstellen 32 halbiert.

Neben der zwei- oder mehrteiligen Ausbildung eines Stützelements 30, ist es auch denkbar, mehrere Stützelemente 30 zu verwenden. In diesem Fall bilden die einzelnen radialen Mantelflächen der Mehrzahl von Stützelementen eine gemeinsame Mantelfläche 38, an der die Mehrzahl von Stützelementen mit den Planetenwälzkörpern 40 in Kontakt stehen. Hierbei ist stets darauf zu achten, dass entweder die Kontur der gemeinsamen Mantelfläche 38 aller Stützelemente 30 einen konstanten Radius in Längsrichtung der Getriebeachse 2 bilden, oder dass die Ausnehmung 52 des Planetenwälzkörpers 40 mit einem konstanten Radius entsprechend der vorherigen Beschreibung ausgebildet ist.

Aus der Fig. 5 geht insbesondere das oben beschriebene Kraftverhältnis bzw. Kräftegleichgewicht in den Kontaktstellen 12 und 22 hervor. Erfährt das Planetengetriebe 1 am Getriebeeingang ein Drehmoment, so wird dieses u. a. mittels einer Anpressvorrichtung (nicht dargestellt, siehe Fig. 9) auf ein dem Getriebeeingang zugeordnetes Übertragungselement übertragen. Im dargestellten Fall sei das Übertragungselement 20 dem Getriebeeingang zugeordnet. Aufgrund der drehmomentabhängigen Anpressvorrichtung, wie in Bezug auf Fig. 9 genauer beschrieben ist, wirkt auf das Übertragungselement 20 eine drehmomentabhängige und axial zur Getriebeachse 2 gerichtete Anpresskraft. Diese ruft in der Kontaktstelle 22 zwischen dem zweiten Übertragungselement 20 und dem Planetenwälzkörper 40 eine axiale Kraft F_{A2} hervor. Die Kraft F_{A2} in der zweiten Kontaktstelle 22 bewirkt ihrerseits die axiale Reaktionskraft F_{A1} in der ersten Kontaktstelle 12 des ersten Übertragungselements 10. Da die axialen Kräfte F_{A1}, F_{A2} jeweils auf schräge Kontaktfläche wirken, wie durch den Winkel γ zwischen der Getriebeachse 2 und der Tangente T in der Kontaktstelle 22 angedeutet, bewirken die axialen Kräfte F_{A1}, F_{A2} radiale Reaktionskräfte F_{R1}, F_{R2} in der ersten und zweiten Kontaktstelle 12, 22.

Aufgrund des konstanten Abstandes D zwischen dem ersten Übertragungselement 10 und dem zweiten Übertragungselement 20 sowie den konstanten Radien R1 (bzw. R1,1 und R1,2) der Seitenabschnitte 44, 46 der Planetenwälzkörper 40 sind die geometrischen Verhältnisse in beiden Kontaktstellen 12, 22 in jeder Winkelposition der Planetenwälzkörper 40 dieselben (gespiegelt an der Symmetrieachse S). Die beiden gleich großen axialen Kräfte F_{A1} und F_{A2} haben daher auch gleich große radiale Kräfte F_{R1} und F_{R2} zur Folge. Die Summe aus axialer Kraftkomponente (F_{A1} bzw. F_{A2}) und radialer Kraftkomponente (F_{R1} bzw. F_{R2}) entspricht der Normalkraft F_{N} (F_{N1} bzw. F_{N2}), die in der Kontaktstelle 12, 22 senkrecht zur Oberfläche des Planetenwälzkörpers 40 (bzw. der Tangente T) wirkt.

Wie in Fig. 5 zu erkennen ist, sind die gleich großen axialen Kraftkomponenten F_{A1} und F_{A2} in entgegengesetzte Richtungen gerichtet, so dass sich die axialen Anpresskräfte aufheben. Die Summe der radialen Kräfte F_{R1}, F_{R2} wird in der dritten Kontaktstelle 32 abgestützt, wie es in Fig. 5 durch die Kraft F_{R1,2} angedeutet ist. Da sich die axialen Kräfte F_{A1} und F_{A2} gegenseitig aufheben, stehen diese der für die Verschiebung des Planetenwälzkörpers zum Zwecke der Verstellung der Übersetzung benötigten Kraft nicht entgegen. Bei Getriebeformen mit unsymmetrischem Kraftverhältnis überwiegt eine Axialkraft, wenn der Planetenwälzkörper nicht in Normalstellung ist (reine Kraft- bzw. Momentenübertragung). Die Differenz der Axialkräfte wirkt dann der für die Verstellung des Übersetzungsverhältnisses benötigten Kraft entgegen. Daraus ergibt sich der Vorteil des erfindungsgemäßen Getriebes, dass das Getriebe 1 leichter zu schalten ist und somit der Schaltkomfort erhöht wird. Es ist ersichtlich, dass bei einer Vierpunktauflage die am Stützelement 30 abgestützte Radialkraft F_{R1,2} auf zwei dritte Kontaktstellen 32 aufgeteilt wird. Die Aufteilung erfolgt dabei entsprechend der geometrischen Verhältnisse, wobei auch hier ein symmetrisches Kraftverhältnis anzustreben ist. Z. B. ist dies gemäß dem Ausführungsbeispiel nach Fig. 4 erreicht.

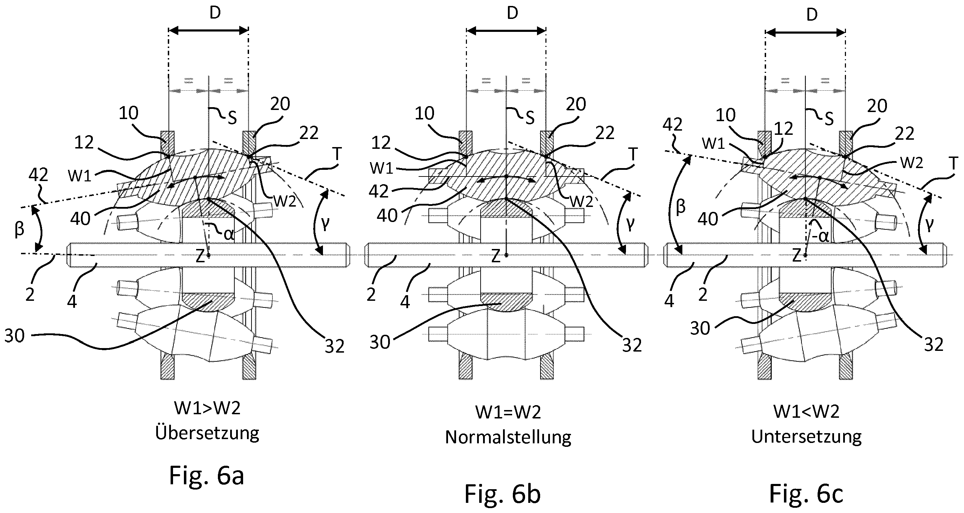

In den Fig. 6a, 6b und 6c sind die Planetenwälzkörper 40 in drei verschiedenen Winkelpositionen α dargestellt. In der Darstellung nach Fig. 6b befindet sich das Getriebe 1 in seiner Normalstellung und der Winkel α beträgt 0°. Die Längsachse 42 der Planetenwälzkörper 40 ist dabei parallel zur Getriebeachse 2. Der Wirkradius W1 ist gleich dem Wirkradius W2, woraus ein Übersetzungsverhältnis von 1 resultiert. Man spricht in diesem Fall von einer reinen Kraft- bzw. Momentenübertragung, da das Eingangsdrehmoment im Wesentlichen gleich dem Ausgangsdrehmoment ist.

In der Darstellung nach Fig. 6a sind die Planetenwälzkörper 40 um den Winkel α in Richtung des Getriebeausgangs (Übertragungselement 10) verschoben. Dementsprechend ist der Wirkradius W1 an der Seite des Getriebeausgangs größer als der Wirkradius W2 an der Seite des Getriebeeingangs (Übertragungselement 20). Daraus resultiert ein Übersetzungsverhältnis, das größer als 1 ist.

In der Darstellung nach Fig. 6c sind die Planetenwälzkörper um den Winkel -α in Richtung des Getriebeeingangs (Übertragungselement 20) verschoben. Demnach ist der Wirkradius W2 größer als der Wirkradius W1, woraus ein Übersetzungsverhältnis kleiner als 1 resultiert. In diesem Fall spricht man von einer Untersetzung.

Wie sich aus der Zusammenschau der Fig. 6a bis 6c ergibt, sind die Kontaktstellen 12, 22 in jeder Winkelposition α der Planetenwälzkörper 40 axial im selben Abstand angeordnet. Insbesondere liegt die dritte Kontaktstelle 32 in jeder Winkelposition α der Planetenwälzkörper symmetrisch zu den Kontaktstellen 12 und 22 auf der Symmetrieachse S. Der Abstand D zwischen dem ersten Übertragungselement 10 und dem zweiten Übertragungselement 20 ändert sich bei Verstellung des Übersetzungsverhältnisses nicht. Unabhängig von der Anzahl und Anordnung der dritten Kontaktstelle(n) 32 ändert sich auch der Winkel γ zwischen der Getriebeachse 2 und der Tangente T in der Kontaktstelle 22 nicht. Selbiges trifft auf den Winkel einer Tangente in der Kontaktstelle 12 zu. Entsprechend sind die auftretenden Axialkräfte unabhängig von der Winkelposition α der Planetenwälzkörper 40 gleich groß, heben sich gegenseitig auf und rufen Radialkräfte gleicher Größe hervor. Dies trifft auch in dem Fall zu, in dem die zwei Seitenabschnitte 44, 46 der Planetenwälzkörper 40 unterschiedliche Radien R1,1 und R1,2 aufweisen, die einen gemeinsamen Mittelpunkt Z haben.

Weiterhin ist anhand der Fig. 6a bis 6c zu erkennen, wie sich der Winkel β zwischen der Längsachse 42 und der Getriebeachse 2 abhängig von der Winkelposition α der Planetenwälzkörper 40 zwischen den beiden Extrempositionen (Fig. 6a und Fig. 6c) ändert. Es ist dabei auch nachzuvollziehen, dass der maximal auftretende Winkel β kleiner ist, je weiter der Drehpunkt Z außerhalb des Planetenwälzkörpers 40 angeordnet ist. Hinsichtlich eines verbesserten Bohr-/ Wälzverhältnisses in den Kontaktstellen 12, 22 und den damit einhergehenden Verlusten ist der Planetenwälzkörper 40 daher optimiert so zu gestalten, dass er möglichst lang und flach ausgebildet ist (geringer Winkel γ) und der maximal auftretende Winkel β zwischen der Längsachse 42 und der Getriebeachse 2 möglichst klein ist.

In den Fig. 7a und 7b ist eine bevorzugte Ausführungsform der Verstellvorrichtung 80 zum Verschieben der Planetenwälzkörper 40 und damit zum Einstellen der Übersetzung dargestellt. Dem Fachmann stehen jedoch weitere Möglichkeiten offen, Stellbewegungen zur Verstellung der Übersetzung des Getriebes 1 auf den Planetenwälzkörper 40 zu übertragen. Die Verstellvorrichtung 80 ist in den beiden Extrempositionen der Untersetzung (Fig. 7a) und der Übersetzung (Fig. 7b) dargestellt. Zur besseren Veranschaulichung sind jeweils nur ein Stützelement 30 und ein Planetenwälzkörper 40 dargestellt, der mit der Verstellvorrichtung 80 verbunden ist. Es versteht sich, dass die nicht dargestellten Komponenten dennoch in geeigneter Weise, wie z. B. in Bezug auf Fig. 1 bis 6, 8 und 9 beschrieben, vorhanden sind. Der Planetenwälzkörper 40 steht in Kontakt mit dem Stützelement 30. Die Endabschnitte 48, 50 des Planetenwälzkörpers sind jeweils mittels eines Wälzlagers 90 in einem Schuh 86 der Verstellvorrichtung 80 gelagert. Das Wälzlager 90 ist vorzugsweise in Form eines Festlagers am Planetenwälzkörper 40 befestigt. Es ist ebenso möglich, dass nur ein Endabschnitt 48 oder 50, über den die Verstellung des Planetenwälzkörpers 40 erfolgt, in einem Schuh 86 gelagert ist. Zur besseren Führung und Abstützung der Planetenwälzkörper 40 bietet es sich jedoch an, beide Endabschnitte 48, 50 mit Schuhen 86 zu versehen. An dem Schuh 86, über den die Verstellung des Planetenwälzkörpers 40 erfolgt, ist weiterhin ein Arm 84 befestigt, wobei der Schuh 86 und der Arm 84 in einem annähernd festen Winkel δ zueinander angeordnet sind, der vorzugsweise ca. 90° beträgt. Zum einen ist der Arm 84 über einen Kugelabschnitt mit dem Schuh 86 spielfrei verbunden und vorzugsweise als Kugelgelenkverbindung ausgeführt. Zum anderen ist der Arm 84 über einen Gelenkkopf 88 mit dem Träger 82 verbunden. Der Gelenkkopf 88 ist vorzugsweise als Kugelkopf ausgebildet, wobei der Arm 84 eine entsprechende Aufnahme aufweist, sodass der Arm 84 und der Gelenkkopf 88 ein Kugelgelenk bilden. Das Kugelgelenk erlaubt dem Arm 84 die Bewegung um denselben. Aus den Seitenansichten geht jeweils hervor, dass mehrere Gelenkköpfe 88 vorgesehen sein können, wobei die Anzahl an Gelenkköpfen 88 an die Anzahl der verwendeten Planetenwälzkörper 40 angepasst sein sollte.

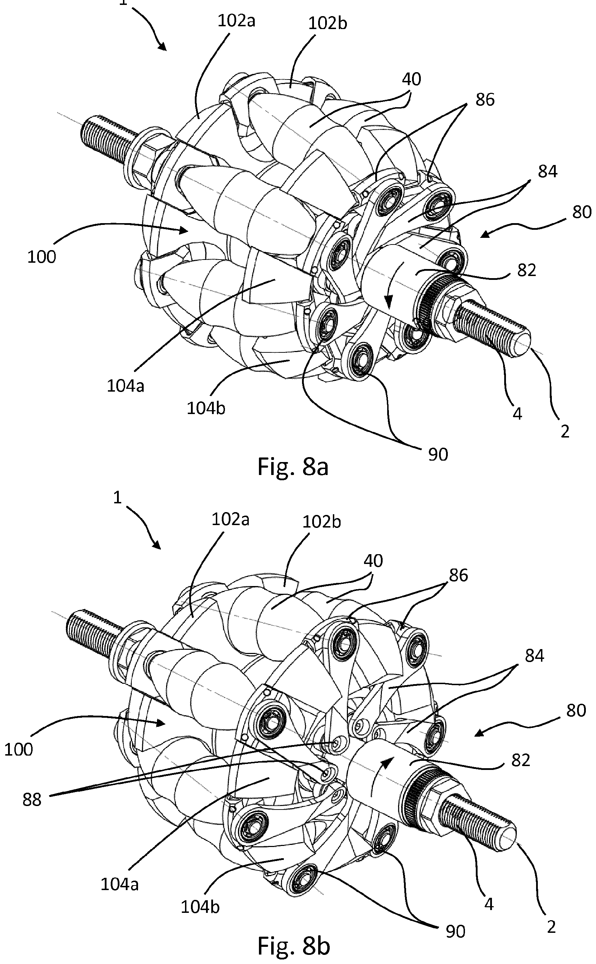

Zur Verstellung des Übersetzungsverhältnisses ist der Träger 82 unabhängig vom Getriebeeingang bzw. der Getriebewelle 4 drehbar. Der Träger 82 kann dennoch auf der Getriebewelle 4 angeordnet sein, sodass die Drehung um die Getriebeachse 2 erfolgt. Die Schuhe 86 sind radial in einem Führungselement 100 geführt, wie unter Bezug auf Fig. 8 beschrieben wird. Durch das Verdrehen des Trägers 82 und der daran befestigten Gelenkköpfe 88 erfährt das mit einem Gelenkkopf verbundene Ende des Arms 84 ebenfalls eine Drehbewegung um die Getriebeachse 2, die aufgrund der Führung des Schuhs 86 im Führungselement 100 zu einer radialen Verschiebung desselben führt. Der mit dem Schuh 86 verbundene Endabschnitt 50 des Planetenwälzkörpers 40 wird dadurch ebenfalls radial nach außen verschoben. Aufgrund der Zwangsführung des Planetenwälzkörpers 40 durch die Übertragungselemente 10, 20 und das Stützelement 30 wird diesem bei radialer Verschiebung eines Endabschnitts 48 oder 50 eine axiale Bewegungskomponente bezüglich der Getriebeachse 2 aufgezwungen, so dass sich der Mittelpunkt M auf einer Kreisbahn K bewegt. Dieser Verschiebung kann das mit dem Schuh 86 verbundene Ende des Arms 84 folgen, während das mit dem Gelenkkopf 88 verbundene Ende des Arms 84 um das Kugelgelenk verschwenkt. Vorzugsweise ist die Verstellvorrichtung absolut spielfrei ausgebildet, damit sämtliche Planetenwälzkörper 40 dieselbe Übersetzungsposition einnehmen und das zu übertragende Drehmoment mit derselben Umfangsgeschwindigkeit an die Übertragungselemente 10, 20 weitergegeben wird. Wäre dies nicht der Fall, würden in den Kontaktstellen 12, 22 zwischen den Übertragungselementen 10, 20 und den Planetenwälzkörpern 40 zusätzliche Schlupf- bzw. Reibverluste entstehen.

Wie weiter aus den Fig. 8a und 8b hervorgeht, ist vorzugsweise ein Führungselement 100 vorzusehen, das aus einer ersten Hälfte 102 und einer zweiten Hälfte 104 bestehen kann. Die Zweiteiligkeit ist dabei im Wesentlichen der Montage des Stützelements 30 geschuldet, wie aus Fig. 9 hervor geht. Das Führungselement 100 ist auf der Getriebewelle 4 gelagert und hält die Planetenwälzkörper 40 entlang des Umfangs des Getriebes 1 in einem definierten Abstand zueinander. Hierzu sind die mit den Planetenwälzkörpern 40 verbundenen Schuhe 86 der Verstellvorrichtung 80 in Aufnahmen zwischen zwei entlang des Umfangs benachbarten Abschnitten 102a und 102b bzw. 104a und 104b des Führungselements 100 aufgenommen. Insbesondere stützen die Schuhe 86 dabei die Drehmomentdifferenz zwischen Getriebeeingang und Getriebeausgang gegenüber den Führungselementhälften 102 und 104 ab. Damit die radiale Verschiebung der Schuhe 86 in den Aufnahmen zwischen zwei benachbarten Abschnitten 102a und 102b bzw. 104a und 104b auch unter Last möglichst reibungsfrei verläuft, können an den Seitenflanken der Schuhe 86 Abrollelemente 87 vorgesehen sein, die in Fig. 7a und 7b erkennbar sind. Die Schuhe 86 können aber auch ohne Abrollelemente 87 ausgeführt sein, wobei die Verschiebung der Schuhe 86 entlang des Führungselements 100 durch geeignete Materialwahl unterstützt werden sollte.

Das Führungselement 100 ist mit seinen Hälften 102, 104 vorzugsweise axial und radial auf der Getriebeachse 4 festgelegt. Dabei erzeugt ein Verdrehen des Trägers 82 der Verstellvorrichtung 80, wie es in den Fig. 8a und 8b jeweils durch einen Pfeil angedeutet ist, eine Relativbewegung zwischen dem Träger 82 und der Getriebeachse 4 bzw. dem Führungselement 100. Aufgrund dieser Relativbewegung in Umfangsrichtung des Trägers 82 und der radialen Führung der Schuhe 86 in dem Führungselement 100 werden die mit dem Arm 84 verbundenen Endabschnitte 48 oder 50 der Planetenwälzkörper 40 radial nach außen verschoben. Wird der Träger 82 in entgegengesetzter Richtung verdreht, werden die Arme 84 wieder eingedreht, so dass die Gelenkköpfe 88 hinter den benachbarten Armen 84 eintauchen bzw. aufgrund der Verschiebung der Arme 84 in Richtung des Trägers 82 von diesen überdeckt werden. Diese Bewegung wird auf die Planetenwälzkörper 40 übertragen, wodurch diese entsprechend auf einer Kreisbahn zurückgezogen werden.

In Fig. 9 ist zum besseren Verständnis das erfindungsgemäße Planetengetriebe 1 als im Wesentlichen vollständiges Fahrradnabengetriebe dargestellt. Dem Fachmann sind zahlreiche Ausführungsformen herkömmlicher Nabengetriebe für Fahrräder bekannt, sodass beispielsweise die Lagerung des Nabengehäuses mittels Radiallager sowie die Abdichtung des Gehäuses hier nicht im Detail beschrieben sind. Vor allem für die Lagerung einzelner Komponenten bzw. die form- oder reibschlüssige Verbindung einzelner Komponenten sind dem Fachmann zahlreiche Alternativen bekannt.

Die Getriebewelle 4 ist in den Bereichen zwischen den Verbindungselementen 106 bzw. 106 und 108 in entsprechende Ausfallenden des Fahrradrahmens (nicht dargestellt) eingelegt und mittels der Verbindungselemente 106, 108 form- und kraftschlüssig mit dem Fahrradrahmen verbunden. Das Getriebegehäuse besteht aus zwei Hälften 120, 122, wobei die zweite Getriebehaushälfte 122 mit dem Laufrad des Fahrrads (nicht dargestellt) verbunden ist. Das Getriebegehäuse ist vorzugsweise derart ausgebildet, dass die Getriebehaushälfte 122 eine Aufnahme bildet, die von einer als Deckel ausgebildeten Getriebehaushälfte 120 dicht verschlossen werden kann. Das Getriebegehäuse 120, 122 ist sollte mit einem Reiböl gefüllt und hermetisch gegenüber der Umgebung abgedichtet sein. Daraus ergeben sich weitere Vorteile bezüglich der Wartung, der Verschmutzung und des Verschleißes des Getriebes.

Die beiden Hälften 102, 104 des Führungselements 100 sind formschlüssig mit der Getriebeachse 4 verbunden und übertragen das an dem Planetenwälzkörper 40 entstehende Reaktionsmoment (Drehmomentdifferenz) über die Getriebeachse 4 und die Verbindungselemente 106, 108 auf den Fahrradrahmen (nicht dargestellt). Mittig auf dem Führungselement 100 (102, 104) ist das Stützelement 30 mittels zweier Radiallager gelagert, die beispielsweise als Wälzlager mit den Wälzkörpern 37 ausgebildet ist. Die beiden Übertragungselemente 10, 20 sind mittels der zwei Anpressmechanismen 60 und 70 am Getriebegehäuse 120, 122 axial abgestützt und stehen mit den Planetenwälzkörpern 40 in den Kontaktstellen 12, 22 in reibschlüssiger Rollverbindung. Das Stützelement 30 stützt die Planetenwälzkörper 40 in mindestens einer dritten Kontaktstelle 32 gegenüber den Übertragungselementen 10, 20 ab. Die Planetenwälzkörper 40 sind umlaufend um die Getriebeachse 4 angeordnet und werden von dem Führungselement 100 in einem definierten Abstand zueinander gehalten. Weiterhin sind die Planetenwälzkörper 40 um ihre Längsachse 42 drehbar mittels Wälzlagern in den Schuhen 86 der Verstellvorrichtung 80 gelagert. Die Schuhe 86 wiederum sind in Aufnahmen radial verschiebbar gelagert, die zwischen zwei aneinander angrenzenden Abschnitten 102a und 102b bzw. 104a und 104b der beiden Hälften 102, 104 des Führungselements 100 gebildet sind.

Die Anpressvorrichtungen 60, 70 umfassen im Wesentlichen die Übertragungselemente 10, 20 und die Stützringe 62, 72, wobei zwischen dem Stützring 62 und dem Übertragungselement 10 Wälzkörper 64 und zwischen dem Stützring 72 und dem Übertragungselement 20 Wälzkörper 74 angeordnet sind. Die Wälzkörper 64, 74 sind vorzugsweise als Kugeln ausgebildet und liegen formschlüssig in konischen Vertiefungen, die zwischen den Stützringen 62, 72 und den Übertragungselementen 10, 20 ausgebildet sind. Beim Verdrehen der Ringpaare 62 und 10 bzw. 72 und 20 gegeneinander erzeugen die Wälzkörper 64, 74 einen Abstand zwischen den jeweiligen Ringpaaren und somit eine axiale Anpresskraft auf die Planetenwälzkörper 40. Dem Fachmann sind hier eine Reihe alternativer Anpressmechanismen aus dem Stand der Technik bekannt. So können beispielsweise statt Kugeln auch Wälzkörper zylindrischer Form verwendet werden, die in entsprechenden Aufnahmen mit Steigungen zwischen den jeweiligen Ringpaaren aufgenommen sind. Zudem sind Anpressvorrichtungen bekannt, bei denen allein die auf die Kugelkörper wirkenden Fliehkräfte ein Auseinanderdrücken der Ringpaare bewirken. Bekannterweise stehen derartige Anpressvorrichtungen 60, 70 auch ohne Last unter einer leichten Vorspannung. Diese Vorspannung ist notwendig, damit beim Drehmomentaufbau die Übertragungselemente 10, 20 bezüglich der Planetenwälzkörper nicht durchrutschen. Die Vorspannung kann beispielsweise durch Federn oder Magneten erzeugt werden. Das Getriebe 1 kann auch nur mit einer Anpressvorrichtung 60 oder 70 vorgesehen sein. Im Hinblick auf symmetrische (Kraft- und geometrische) Verhältnisse ist das Getriebe 1 jedoch besonders bevorzugt wie dargestellt mit zwei Anpressvorrichtungen 60 und 70 ausgebildet, die jeweils dem ersten Übertragungselement 10 bzw. dem zweiten Übertragungselement 20 zugeordnet sind.

Die entstehenden Anpresskräfte (Axialkräfte), die durch die Anpressvorrichtungen 60, 70 erzeugt werden, nimmt das Getriebegehäuse 120, 122 in axialer Richtung auf. Die erste Anpressvorrichtung 60 bzw. deren Stützring 62 ist formschlüssig mit der Getriebehaushälfte 122 verbunden. Die zweite Anpressvorrichtung 70 bzw. deren Stützring 72 ist über ein Axiallager 78 an der Gehäusehälfte 120 abgestützt. Das Axiallager 78 ist dabei durch den Stützring 72 der zweiten Anpressvorrichtung 70, Wälzkörpern 79 (beispielsweise Kugeln oder Walzen) und einem weiteren Stützring, der an der Gehäusehälfte 120 anliegt, gebildet. Auch hier sind alternative Formen zur Ausbildung des Axiallagers denkbar.

Das Eingangsdrehmoment wird im dargestellten Ausführungsbeispiel mittels einer Fahrradkette oder eines Zahnriemens (nicht dargestellt) auf ein Ritzel 124 oder ein anderes geeignetes Eingangselement übertragen. Das Ritzel 124 ist reibschlüssig mit einer Aufnahme 126 verbunden, welche wiederum auf der Getriebeachse 4 wälzgelagert ist. Der Aufnahme 126 schließt sich ein Klinkenfreilauf 128 an. Der Klinkenfreilauf 128 steht drehrichtungsabhängig mit einer Freilaufscheibe 130 mit Innenverzahnung im Formschluss, die wiederum im Formschluss mit der drehmomentabhängigen Anpressvorrichtung 70, genauer mit deren Stützring 72 steht. Auf diese Weise wird das Drehmoment über das Ritzel 124, dessen Aufnahme 126, den Klinkenfreilauf 128 und die Freilaufscheibe 130 auf die Anpressvorrichtung 70 übertragen. Über die Anpressvorrichtung 70 wird das Drehmoment mittels des Übertragungselements 20 an den zweiten Kontaktstellen 22 in die Planetenwälzkörper 40 eingeleitet, wobei durch die Kugeln 74 eine drehmomentabhängige axiale Anpresskraft erzeugt wird. Das in den zweiten Kontaktstellen anstehende Drehmoment und die axiale Anpresskraft versetzen die in reibschlüssiger Rollverbindung mit dem Übertragungselement 20 stehenden Planetenwälzkörper 40 in Rotation. Über die ebenfalls reibschlüssige Rollverbindung zwischen den Planetenwälzkörpern 40 und dem ersten Übertragungselement 10 in den ersten Kontaktstellen 12 erfolgt die Übertragung des Drehmoments auf das abtreibende Übertragungselement 10. Idealerweise bilden die Übertragungselemente 10, 20 und das Stützelement 30 bzw. deren Kontaktstellen 12, 22 und 32 zu den Planetenwälzkörpern 40 eine zur Symmetrieachse bzw. -ebene S symmetrische Dreipunktauflage für die Planetenwälzkörper 40. Das Drehmoment wird mittels der Anpressvorrichtung 60 vom Übertragungselement 10 auf das mit dem Stützring 62 formschlüssig verbundene Nabengehäuse 122 übertragen und somit schließlich an das mit dem Nabengehäuse 122 verbundene Laufrad (nicht dargestellt) eingeleitet.

Die Übersetzungsverstellung ist im Wesentlichen in Bezug auf die Fig. 7 und 8 beschrieben. Der Anwender kann die Übersetzungsverstellung über ein Bedienelement, das beispielsweise am Lenker des Fahrrads angeordnet ist, vornehmen. Dieses Bedienelement ist beispielsweise mittels mindestens eines Zugseils 134 mit dem Seilzugträger 132 verbunden. Der Seilzugträger 132 ist wiederum formschlüssig mit dem Träger 82 der Verstellvorrichtung 80 verbunden. Der Anwender erzeugt mittels des Bedienelements und des Zugseils 134 eine Stellbewegung am Seilzugträger 132. Mittels der Gelenkköpfe 88, der Arme 84, der Wälzlager 90 und der Schuhe 86 wird diese rotatorische Stellbewegung auf einen Endabschnitt 50 der Planetenwälzkörper 40 übertragen. Dabei werden die Schuhe 86 im Wesentlichen radial in Aufnahmen zwischen zwei aneinander angrenzenden Abschnitten 102a und 102b bzw. 104a und 104b des Führungselements 100 verschoben. Die Planetenwälzkörper 40 werden daraufhin durch die Zwangsführung der Kontaktstellen 12, 22, 32 derart verschoben, dass der Mittelpunkt M der Planetenwälzkörper 40 eine Kreisbahn K beschreibt. Auf diese Weise ändern sich die Wirkradien W1 und W2 zwischen dem ersten Übertragungselement 10 bzw. dem zweiten Übertragungselement 20 und der Längsachse 42 der Planetenwälzkörper 40 und somit entsprechend die Übersetzung des Getriebes.

Das hier dargestellte Ausführungsbeispiel ist als eine von vielen Alternativen zur Anwendung des erfindungsgemäßen Planetengetriebes zu sehen ist. Keineswegs sollten die dargestellten Ausführungsbeispiele als Einschränkung des Schutzumfangs gesehen werden. Durch entsprechende Anpassung der Dimensionen bzw. der Anbindung des Getriebes an einen An- und einen Abtrieb ist das erfindungsgemäße Planetengetriebe in einer Vielzahl verschiedener Anwendungsbereiche einsetzbar. Beispielsweise kann das erste Übertragungselement bzw. ein Reibring drehfest auf der Getriebeachse angeordnet sein, und die Einleitung eines Drehmoments erfolgt über das Stützelement sowie die Ausleitung über das zweite Übertragungselement. So bieten sich für den Fachmann zahlreiche Möglichkeiten bei der Anwendung des erfindungsgemäßen stufenlosen Planetengetriebes.

## Patentansprüche

1. Stufenloses Planetengetriebe (1) mit
einem ersten und einem zweiten Übertragungselement (10, 20), die um eine Getriebeachse (2) drehbar und axial in einem festen Abstand (D) zueinander angeordnet sind, sowie mit mindestens einem Stützelement (30), das im Wesentlichen radial zur Getriebeachse (2) festgelegt ist;
mindestens einem länglichen Planetenwälzkörper (40), der rotationssymmetrisch um seine Längsachse (42) und um diese drehbar ausgebildet ist;
wobei das erste Übertragungselement (10) mindestens eine erste Kontaktstelle (12), das zweite Übertragungselement (20) mindestens eine zweite Kontaktstelle (22) und das mindestens eine Stützelement (30) mindestens eine dritte Kontaktstelle (32) aufweisen, wobei in den Kontaktstellen (12, 22, 32) jeweils eine reibschlüssige Rollverbindung mit einem Planetenwälzkörper (40) besteht, sodass der mindestens eine Planetenwälzkörper (40) um die Getriebeachse (2) bewegbar zwischen dem ersten und dem zweiten Übertragungselement (10, 20) und dem mindestens einen Stützelement (30) aufgenommen ist; und
wobei eine Verschiebung des Mittelpunkts (M) des mindestens einen Planetenwälzkörpers (40) eine Änderung der Übersetzung des Planetengetriebes (1) bewirkt;
**dadurch gekennzeichnet, dass**
das mindestens eine Stützelement (30) im Wesentlichen axial zur Getriebeachse (2) festgelegt ist.

2. Stufenloses Planetengetriebe (1) nach Anspruch 1, **dadurch gekennzeichnet, dass** das erste Übertragungselement (10), das zweite Übertragungselement (20) und das mindestens eine Stützelement (30) eine Zwangsführung für den mindestens einen Planetenwälzkörper (40) bilden, sodass der Mittelpunkt (M) des mindestens einen Planetenwälzkörpers (40) bei der Verschiebung des Planetenwälzkörpers (40) zum Zwecke der Übersetzungsänderung eine Kreisbahn (K) beschreibt.

3. Stufenloses Planetengetriebe (1) nach Anspruch 1 oder 2, **dadurch gekennzeichnet, dass** die Längsachse (42) des mindestens einen Planetenwälzkörpers (40) eine Längsrichtung desselben definiert und dass der mindestens eine Planetenwälzkörper (40) zwei in Längsrichtung gegenüberliegende Seitenabschnitte (44, 46) aufweist, deren Mantelflächen in Längsrichtung konvex gekrümmt sind, sodass der Planetenwälzkörper (40) zu zwei in Längsrichtung gegenüberliegenden Endabschnitten (48, 50) des Planetenwälzkörpers (40) und zur Längsachse (42) hin verjüngt ausgebildet ist.

4. Stufenloses Planetengetriebe (1) nach Anspruch 3, **dadurch gekennzeichnet, dass** die konvexen Krümmungen der Mantelflächen der zwei Seitenabschnitte (44, 46) in Längsrichtung jeweils einen konstanten Radius (R1; R1,1; R1,2) aufweisen.

5. Stufenloses Planetengetriebe (1) nach einem der vorangehenden Ansprüche, **dadurch gekennzeichnet, dass** der mindestens eine Planetenwälzkörper (40) in Längsrichtung mittig eine umlaufende Ausnehmung (52) aufweist.

6. Stufenloses Planetengetriebe (1) nach Anspruch 5, **dadurch gekennzeichnet, dass** die Mantelfläche der umlaufenden Ausnehmung (52) in Längsrichtung konkav gekrümmt ist und diese konkave Krümmung in Längsrichtung einen konstanten Radius (R2) aufweist.

7. Stufenloses Planetengetriebe (1) nach Anspruch 6, **dadurch gekennzeichnet, dass** das mindestens eine Stützelement (30) genau eine dritte Kontaktstelle (32) aufweist, die auf einer Symmetrieachse (S) liegt, zu der die mindestens eine erste Kontaktstelle (12) und die mindestens eine zweite Kontaktstelle (22) achsensymmetrisch angeordnet sind, und dass die erste, zweite und dritte Kontaktstelle (12, 22, 32) eine Dreipunktauflage für einen Planetenwälzkörper (40) bilden.

8. Stufenloses Planetengetriebe (1) nach Anspruch 5, **dadurch gekennzeichnet, dass** die umlaufende Ausnehmung (52) im Querschnitt V-förmig ausgebildet ist.

9. Stufenloses Planetengetriebe (1) nach Anspruch 8, **dadurch gekennzeichnet, dass** eine Mantelfläche (38) des mindestens einen Stützelements (30) in axialer Richtung der Getriebeachse (2) konvex und mit einem konstanten Radius gekrümmt ist.

10. Stufenloses Planetengetriebe (1) nach einem der Ansprüche 6 oder 9, **dadurch gekennzeichnet, dass** das mindestens eine Stützelement (30) zwei dritte Kontaktstellen (32) aufweist, sodass die erste, zweite und die zwei dritten Kontaktstellen (12, 22, 32) eine Vierpunktauflage für einen Planetenwälzkörper (40) bilden.

11. Stufenloses Planetengetriebe (1) nach einem der vorangehenden Ansprüche, **dadurch gekennzeichnet, dass** das mindestens eine Stützelement (30) mehrteilig ausgebildet ist.

12. Stufenloses Planetengetriebe (1) nach einem der vorangehenden Ansprüche, **dadurch gekennzeichnet, dass** das Planetengetriebe (1) weiterhin eine erste und eine zweite drehmomentabhängige Anpressvorrichtung (60, 70) umfasst, wobei jeweils eine Anpressvorrichtung (60, 70) mit dem ersten und dem zweiten Übertragungselement (10, 20) in Verbindung steht und die zwei Anpressvorrichtungen (60, 70) ein Anpressen des ersten und des zweiten Übertragungselements (10, 20) an den mindestens einen Planetenwälzkörper (40) bewirken.

13. Stufenloses Planetengetriebe (1) nach einem der vorangehenden Ansprüche, **dadurch gekennzeichnet, dass** es weiterhin eine Verstellvorrichtung (80) zum Verschieben des mindestens einen Planetenwälzkörpers (40) umfasst, wobei die Verstellvorrichtung (80) an mindestens einem Endabschnitt (48, 50) des mindestens einen Planetenwälzkörpers (40) angreift.

14. Verfahren zum Ändern der Übersetzung eines stufenlosen Planetengetriebes (1),
Erzeugen einer Stellbewegung an einem Eingang einer Verstellvorrichtung (80);
Übertragen der Stellbewegung auf mindestens einen Endabschnitt (48, 50) mindestens eines Planetenwälzkörpers (40) mittels der Verstellvorrichtung (80);
Verschieben des Mittelpunkts (M) des mindestens einen Planetenwälzkörpers (40) auf einer Kreisbahn (K) aufgrund der Stellbewegung und damit Ändern der Übersetzung.

## Claims

1. Infinitely adjustable planetary gear (1) with
a first and a second transfer element (10, 20) which are arranged rotatable about a gear axle (2) and at a fixed distance (D) axially relative to one another, as well as with at least one supporting element (30) which is fixed substantially radially relative to the gear axle (2);
at least one oblong planetary rolling body (40) which is formed rotationally symmetrical about its longitudinal axis (42) and is capable of rotating about the latter;
wherein the first transfer element (10) has at least one first contact point (12), the second transfer element (20) has at least one second contact point (22), and the at least one supporting element (30) has at least one third contact point (32), wherein a friction-engaging rolling connection with a planetary rolling body (40) exists at each contact point (12, 22, 32) so that the at least one planetary rolling body (40) is received in a movable manner about the gear axle (2) between the first and the second transfer element (10, 20) and the at least one supporting element (30); and
wherein a displacement of the centre point (M) of the at least one planetary rolling body (40) causes a change in the transmission ratio of the planetary gear (1);
**characterised in that**
the at least one supporting element (30) is fixed substantially axially in relation to the gear axle (2).

2. Infinitely adjustable planetary gear (1) according to claim 1 **characterised in that** the first transmission element (10), the second transmission element (20) and the at least one supporting element (30) form a forced guidance for the at least one planetary rolling body (40), so that the centre point (M) of the at least one planetary rolling body (40) describes a circular path (K) during displacement of the planetary rolling body (40) for the purpose of changing the transmission ratio.

3. Infinitely adjustable planetary gear (1) according to claim 1 or 2 **characterised in that** the longitudinal axis (42) of the at least one planetary rolling body (40) defines a longitudinal direction thereof and that the at least one planetary rolling body (40) has two lateral portions (44, 46) which are opposite one another in the longitudinal direction and whose lateral faces are curved convex in the longitudinal direction so that the planetary rolling body (40) is designed tapering towards two longitudinally opposing end portions (48, 50) of the planetary rolling body (40) and towards the longitudinal axis (42).

4. Infinitely adjustable planetary gear (1) according to claim 3 **characterised in that** the convex curvatures of the lateral faces of the two lateral portions (44, 46) each have a constant radius (R1; R1,1; R1,2) in the longitudinal direction.

5. Infinitely adjustable planetary gear (1) according to one of the preceding claims **characterised in that** the at least one planetary rolling body (40) has a peripheral recess (52) in the middle in the longitudinal direction.

6. Infinitely adjustable planetary gear (1) according to claim 5 **characterised in that** the lateral surface of the peripheral recess (52) is curved concave in the longitudinal direction and this concave curvature in the longitudinal direction has a constant radius (R2).

7. Infinitely adjustable planetary gear (1) according to claim 6 **characterised in that** the at least one supporting element (30) has just one third contact point (32) which lies on an axis of symmetry (S) with which the at least one first contact point (12) and the at least one second contact point (22) are arranged axially symmetrical, and that the first, second and third contact points (12, 22, 32) form a three-point support for a planetary rolling body (40).

8. Infinitely adjustable planetary gear (1) according to claim 5 **characterised in that** the peripheral recess (52) is designed with a V-shaped cross-section.

9. Infinitely adjustable planetary gear (1) according to claim 8 **characterised in that** a lateral surface (38) of the at least one supporting element (30) is curved convex in the axial direction of the gear axle (2) and with a constant radius.

10. Infinitely adjustable planetary gear (1) according to one of claims 6 or 9 **characterised in that** the at least one supporting element (30) has two third contact points (32) so that the first, second and the two third contact points (12, 22, 32) form a four-point support for a planetary rolling body (40).

11. Infinitely adjustable planetary gear (1) according to one of the preceding claims **characterised in that** the at least one supporting element (30) is of a multi-part design.

12. Infinitely adjustable planetary gear (1) according to one of the preceding claims **characterised in that** the planetary gear (1) further comprises a first and a second torque-dependent contact pressing device (60, 70) wherein one contact pressing device (60, 70) is connected to each first and second transfer element (10, 20) and the two contact pressing devices (60, 70) cause the first and the second transfer elements (10, 20) to press against the at least one planetary rolling body (40).

13. Infinitely adjustable planetary gear (1) according to one of the preceding claims **characterised in that** it further comprises an adjusting device (80) for displacing the at least one planetary rolling body (40) wherein the adjusting device (80) engages on at least one end portion (48, 50) of the at least one planetary rolling body (40).

14. Method for changing the transmission ratio of an infinitely adjustable planetary gear (1),
producing a positioning movement at an input of an adjusting device (80);
transferring the positioning movement to at least one end portion (48, 50) of at least one planetary rolling body (40) by means of the adjusting device (80);
displacing the centre point (M) of the at least one planetary rolling body (40) on a circular path (K) as a result of the positioning movement, and thus changing the transmission ratio.

## Revendications

1. Transmission planétaire à variation continue (1) comprenant
un premier et un deuxième élément de transmission (10, 20), qui sont agencés à distance fixe (D) l'un de l'autre de manière axiale et de manière à pouvoir tourner autour d'un axe de transmission (2), ainsi qu'au moins un élément d'appui (30), qui est fixé sensiblement radialement par rapport à l'axe de transmission (2),
au moins un corps roulant planétaire (40) allongé, qui est réalisé à symétrie de rotation autour de son axe longitudinal (42) et de manière à pouvoir tourner autour de celui-ci,
dans lequel le premier élément de transmission (10) présente au moins un premier point de contact (12), le deuxième élément de transmission (20) présente au moins un deuxième point de contact (22) et le au moins un élément d'appui (30) présente au moins un troisième point de contact (32), dans lequel respectivement une liaison de roulement à friction avec un corps roulant planétaire (40) est établie dans les points de contact (12, 22, 32), de sorte que le au moins un corps roulant planétaire (40) est logé de manière à pouvoir se déplacer autour de l'axe de transmission (2) entre le premier et le deuxième élément de transmission (10, 20) et le au moins un élément d'appui (30) et
dans lequel un coulissement du centre (M) du au moins un corps roulant planétaire (40) entraîne une modification de la multiplication de la transmission planétaire (1),
**caractérisée en ce que**
le au moins un élément d'appui (30) est fixé sensiblement axialement par rapport à l'axe de transmission (2).

2. Transmission planétaire à variation continue (1) selon la revendication 1, **caractérisée en ce que** le premier élément de transmission (10), le deuxième élément de transmission (20) et le au moins un élément d'appui (30) forment un guidage forcé pour le au moins un corps roulant planétaire (40), de sorte que le centre (M) du au moins un corps roulant planétaire (40), lors du coulissement du corps roulant planétaire (40) aux fins de modification de multiplication, décrit une trajectoire circulaire (K).

3. Transmission planétaire à variation continue (1) selon la revendication 1 ou 2, **caractérisée en ce que** l'axe longitudinal (42) du au moins un corps roulant planétaire (40) définit une direction longitudinale de celui-ci et **en ce que** le au moins un corps roulant planétaire (40) présente deux parties latérales (44, 46) opposées dans la direction longitudinale, dont les surfaces extérieures présentent une courbure convexe dans la direction longitudinale, de sorte que le corps roulant planétaire (40) est aminci en direction de deux parties d'extrémité (48, 50), opposées dans la direction longitudinale, du corps roulant planétaire (40) et en direction de l'axe longitudinal (42).

4. Transmission planétaire à variation continue (1) selon la revendication 3, **caractérisée en ce que** les courbures convexes des surfaces extérieures des deux parties latérales (44, 46) présentent dans la direction longitudinale respectivement un rayon (R1 ; R1,1 ; R1,2) constant.

5. Transmission planétaire à variation continue (1) selon l'une quelconque des revendications précédentes, **caractérisée en ce que** le au moins un corps roulant planétaire (40) présente dans la direction longitudinale de manière centrale un évidement périphérique (52).

6. Transmission planétaire à variation continue (1) selon la revendication 5, **caractérisée en ce que** la surface extérieure de l'évidement périphérique (52) présente une courbure concave dans la direction longitudinale et cette courbure concave présente dans la direction longitudinale un rayon (R2) constant.

7. Transmission planétaire à variation continue (1) selon la revendication 6, **caractérisée en ce que** le au moins un élément d'appui (30) présente un seul troisième point de contact (32), qui se situe sur un axe de symétrie (S) par rapport auquel le au moins un premier point de contact (12) et le au moins un deuxième point de contact (22) sont agencés de manière axialement symétrique, et **en ce que** le premier, le deuxième et le troisième point de contact (12, 22, 32) forment un support en trois points pour un corps roulant planétaire (40).

8. Transmission planétaire à variation continue (1) selon la revendication 5, **caractérisée en ce que** l'évidement périphérique (52) est en forme de V en section transversale.

9. Transmission planétaire à variation continue (1) selon la revendication 8, **caractérisée en ce qu'**une surface extérieure (38) du au moins un élément d'appui (30) présente une courbure convexe dans la direction axiale de l'axe de transmission (2) et présentant un rayon constant.

10. Transmission planétaire à variation continue (1) selon l'une quelconque des revendications 6 ou 9, **caractérisée en ce que** le au moins un élément d'appui (30) présente deux troisièmes points de contact (32), de sorte que le premier, le deuxième et les troisièmes points de contact (12, 22, 32) forment un support à quatre points pour un corps roulant planétaire (40).

11. Transmission planétaire à variation continue (1) selon l'une quelconque des revendications précédentes, **caractérisée en ce que** le au moins un élément d'appui (30) est réalisé en plusieurs parties.

12. Transmission planétaire à variation continue (1) selon l'une quelconque des revendications précédentes, **caractérisée en ce que** la transmission planétaire (1) comporte en outre un premier et un deuxième dispositif de pression (60, 70) dépendants du couple, dans lequel respectivement un dispositif de pression (60, 70) est en relation avec le premier et le deuxième élément de transmission (10, 20) et les deux dispositifs de pression (60, 70) entraînent une pression du premier et du deuxième élément de transmission (10, 20) contre le au moins un corps roulant planétaire (40).

13. Transmission planétaire à variation continue (1) selon l'une quelconque des revendications précédentes, **caractérisée en ce qu'**elle comporte en outre un dispositif de déplacement (80) pour le coulissement du au moins un corps roulant planétaire (40), dans lequel le dispositif de déplacement (80) agit sur au moins une partie d'extrémité (48, 50) du au moins un corps roulant planétaire (40).

14. Procédé pour modifier la multiplication d'une transmission planétaire à variation continue (1), comprenant :
la production d'un mouvement de commande à une entrée d'un dispositif de déplacement (80),
la transmission du mouvement de commande à au moins une partie d'extrémité (48, 50) d'au moins un corps roulant planétaire (40) au moyen du dispositif de commande (80),
le coulissement du centre (M) du au moins un corps roulant planétaire (40) sur une trajectoire circulaire (K) en raison du mouvement de commande et donc la modification de la multiplication.
